# EUROPEAN PATENT APPLICATION

(11) **EP 4 819 032 A1**
(43) Date of publication of application: **07.10.2026**
(21) Application number: 26167773.6
(22) Date of filing: 25.03.2026
(51) Int. Cl.: G06T 3/4053

(54) **GENERATION OF TRAINING DATA FOR IMPROVED SUPER-RESOLUTION MODELS OR DOWNSCALER NETWORKS**

(30) Priority: 04.04.2025 US 202519171118
(71) Applicant: Microsoft Technology Licensing, LLC, Redmond, WA 98052 (US)
(72) Inventor: MELMON, Keith, Redmond, 98052-6399 (US); NENE, Sameer Avinash, Redmond, 98052-6399 (US)
(74) Representative: CMS Cameron McKenna Nabarro Olswang LLP

(57) **Abstract**

A computing system generates a trained super-resolution model using correlated high-resolution and low-resolution image pairs. A first image generator produces high-resolution images, which are processed by a downscaler network to create corresponding low-resolution images. The downscaler network is trained using an initial set of image pairs. Additional high-resolution images are generated and processed by the downscaler network to produce additional low-resolution images, forming a second set of image pairs. The super-resolution model is trained using the second set of image pairs. The trained super-resolution model processes low-resolution images to generate enhanced images with improved detail and reduced artifacts. The model can be used to increase resolution of input images or refine details without changing resolution. The trained model may be deployed on different devices and applied across various rendering environments.

## Description

### FIELD

The present disclosure generally relates to generating training data for super-resolution models or downscaler-networks, improving the performance of such models.

### BACKGROUND

With conventional image processing, it is possible to render images at a variety of display resolutions. This is particularly beneficial for enabling content that is saved at one resolution to be rendered at different resolutions on a plurality of different display devices having different display capabilities. For example, images that are saved at low resolutions can be upscaled to higher resolutions for display on high-resolution displays.

A particular type of upscaling is referred to as super-resolution processing. With super-resolution processing, a higher resolution image of a base image is generated by rendering the base image with a higher pixel density than the underlying base image. For example, a base image having a 2K resolution (1920x1080 pixel resolution) can be upscaled to a 4K resolution image (3840x2160 pixel resolution) by converting each of the pixels in the base image into four new upscaled pixels.

Compared with other upscaling techniques, super-resolution processes use specialized algorithms that are configured to generate outputs comprising new details for the newly upscaled pixels, which are not present in the underlying pixels, such that the new upscaled pixels are not mere duplicates of the underlying base pixels from which they depend. By way of example, each of the new pixels in an upscaled image will usually contain a unique set of properties that are derived from some combination of the underlying base pixels' properties, as well as the properties of the neighboring pixels contained within the base image. In some instances, the new pixel properties will also be based at least in part on the properties of other new neighboring pixels of the upscaled image.

Many different types of super-resolution algorithms and techniques can be used to upscale and enhance an image. For instance, some super-resolution processes can be used to smooth out the edges of the new pixels that are being generated. Some super-resolution processes can also be used to cause the final upscaled images to appear more detailed than the underlying images from which they are based. The super-resolution model algorithms can be tuned for different desired outcomes and styles by controlling algorithm weights applied to control variables or parameters of the algorithms that are based on attributes of the images being processed.

Recent developments in computer technologies include the creation of machine learning models that can be trained to perform various tasks, including upscaling and other forms of super-resolution image processing. Super-resolution machine learning models, for example, can be configured with one or more of the super-resolution processing algorithms that are trained to perform super-resolution processing on a particular type or class of lower-resolution images by applying the models to training data that comprises pairs of low-resolution and high-resolution images. This allows the models to consistently generate high-resolution images based on inputs comprising low-resolution images, similar to the training data.

The use of super-resolution models for assisting with image upscaling is particularly helpful in the gaming industry since many gaming engines are configured to produce initial image outputs that are often generated at initial resolutions that are lower than the high-resolution displays where the gaming content is rendered.

Training super-resolution models for different end-use scenarios (e.g., desired upscaling, image formatting, image rendering styles) can help improve their ability to generate high-quality outputs during runtime. However, a challenge arises because different gaming systems and applications process images with varying styles and formats, and training data that closely resembles the target content may be needed to achieve optimal results in some cases. The availability of such tailored training data, however, is often limited, making it difficult to develop models that perform well across diverse applications.

Unfortunately, it can be difficult to obtain high-quality training data for super-resolution models, particularly for all of the different end-use scenarios. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A computing system generates a trained super-resolution model using correlated high-resolution and low-resolution image pairs. A first image generator produces high-resolution images, which are processed by a downscaler network to create corresponding low-resolution images. The downscaler network is trained using an initial set of image pairs. Additional high-resolution images are generated and processed by the downscaler network to produce additional low-resolution images, forming a second set of image pairs. The super-resolution model is trained using the second set of image pairs. The trained super-resolution model processes low-resolution images to generate enhanced images with improved detail and reduced artifacts. The model can be used to increase resolution of input images or refine details without changing resolution. The trained model may be deployed on different devices and applied across various rendering environments.

In one aspect, the present disclosure provides a process for generating training data and training a super-resolution model using high- and low-resolution image pairs obtained from an image generator and a downscaler network. A rendering package is received by a first image generator, which is configured to process the package. Using the rendering package, the first image generator produces high-resolution images along with corresponding low-resolution images.

A downscaler network is trained, where a first set of image pairs, each comprising a high-resolution image and a corresponding low-resolution image, is used for training. Additional high-resolution images are generated by the first image generator. These additional high-resolution images are then processed by the downscaler network to generate additional low-resolution images.

A second set of image pairs is formed, where each image pair includes one of the additional high-resolution images and its corresponding additional low-resolution image produced by the downscaler network. Training of the super-resolution model occurs, where the second set of image pairs is used to refine and optimize the model.

In another aspect, the present disclosure provides a process for using a trained super-resolution model that has been generated using high- and low-resolution image pairs obtained from a downscaler network and an image generator. Input low-resolution images are received from a first image generator executing on a computing system. The input low-resolution images are processed, where a trained super-resolution model is applied to generate enhanced images. The enhanced images are provided for rendering on a display device of the computing system.

The trained super-resolution model was generated using training data that included high-resolution images and corresponding low-resolution images, which were obtained through a structured training process. A second image generator, configured with a rendering package, generates high-resolution images along with corresponding low-resolution images. A downscaler network is trained, where a first set of image pairs-each including a high-resolution image and a corresponding low-resolution image-is used for training. Additional high-resolution images are generated by the second image generator. The additional high-resolution images are processed, where the downscaler network produces corresponding additional low-resolution images.

A second set of image pairs is generated, each including one of the additional high-resolution images and its corresponding additional low-resolution image produced by the downscaler network. Training of the super-resolution model occurs, where the second set of image pairs is used to refine and optimize the model for deployment.

The present disclosure also includes computing systems and tangible, non-transitory computer-readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 is a diagram illustrating an example environment where complementary high- and low-resolution images can be produced and used to train a downscaler network, where the downscaler network can be used to provide training data for a super-resolution model.
FIG. 2 is a flowchart illustrating an example training process for a downscaler network, where the downscaler network is trained using correlated high- and low-resolution image pairs obtained from an image generator configured with a rendering package.
FIG. 3 is a flowchart illustrating an example training process for a super-resolution model, where the super-resolution model is trained using training data that includes image pairs generated by a downscaler network and an image generator.
FIG. 4 is a flowchart illustrating a process for selecting training data for a super-resolution model, where training data selection includes a combination of native image pairs from an image generator and synthetic image pairs generated by a downscaler network.
FIG. 5 is a flowchart illustrating a process for deploying a trained super-resolution model, where the trained super-resolution model is deployed to a computing device and used to enhance input images produced by an image generator.
FIG. 6 is a flowchart illustrating an example process for obtaining correlated high- and low-resolution image pairs from an image generator, where an image processing pipeline is configured to generate images at multiple resolutions from a common input scene.
FIG. 7 is a flowchart illustrating a process for generating training data and training a super-resolution model using high- and low-resolution image pairs obtained from an image generator and a downscaler network.
FIG. 8 is a flowchart illustrating a process for using a trained super-resolution model that has been generated using high- and low-resolution image pairs obtained from a downscaler network and an image generator
FIG. 9 is a diagram of an example computing system in which some described embodiments can be implemented.
FIG. 10 is a diagram illustrating an example cloud computing environment in which trained super-resolution models and downscaler networks can be deployed for use in enhancing image quality across multiple devices and rendering platforms.

### DETAILED DESCRIPTION

### Overview

As noted in the background, there is a need to obtain high-quality training data for a super-resolution model. Super-resolution is a computational technique for enhancing the resolution and visual fidelity of low-resolution images or frames by reconstructing or synthesizing high-frequency details that are absent in the original input. Unlike traditional upscaling methods, such as bicubic or bilinear interpolation, which only increase the size of an image by approximating pixel values through simple mathematical operations, super-resolution models are designed to infer and restore fine textures, sharp edges, and intricate patterns, producing outputs that closely resemble native high-resolution content. These models use advanced machine learning techniques, particularly convolutional neural networks (CNNs) and generative adversarial networks (GANs), to learn complex mappings from low-resolution inputs to high-resolution outputs, enabling them to approximate details lost during the downscaling process.

While super-resolution is often associated with increasing resolution, the present techniques extend beyond simple upscaling. In some implementations, a super-resolution model is applied to high-resolution images without changing their resolution, instead enhancing fine details, reducing artifacts, and improving clarity. This enhancement is possible because the super-resolution model learns complex patterns from paired low- and high-resolution images during training, allowing it to refine textures, sharpen edges, and suppress noise-even when the input is already at a high-resolution target.

The present disclosure addresses the need for additional training data by leveraging high-resolution and low-resolution image pairs to train a downscaler network. Once trained, the downscaler network can process high-resolution images obtained from an image generator, such as a game engine, and generate corresponding low-resolution images. These image pairs, with downscaler-generated low resolution images, supplement existing training datasets, providing a significantly larger and more diverse set of examples for training a super-resolution model.

By automating the generation of training data through a learned downscaler network, the disclosed techniques increase both the quantity and quality of training samples, enhancing the super-resolution model's ability to generalize to real-world content. The customizability of this approach allows for domain-specific training, such as training a model specifically for a particular game title, application, or visual content type. For example, super-resolution models may struggle with accurately enhancing text-based images. By training on text-heavy image pairs, the model can improve its performance on such content.

These techniques thus enable more robust, adaptable, and higher-quality super-resolution models by generating training data that better aligns with practical use cases. Whether used for upscaling lower-resolution images or enhancing existing high-resolution content, these approaches improve visual fidelity while reducing reliance on manually curated datasets. As a result, they facilitate the deployment of high-performance super-resolution models in various applications, including gaming, video processing, and real-time rendering.

The following sections provide a detailed description of these techniques. First, an example is provided for generating high- and low-resolution image pairs using a trained downscaler network. Next, alternative methods for obtaining correlated training data-including prior approaches based on rendering pipelines-are discussed. Finally, additional details on super-resolution models and downscaler networks are provided, illustrating how they can be structured and trained to optimize performance for different applications.

### Generation of Training Image Pairs Using a Downscaler Network Trained with Correlated High - and Low-Resolution Images

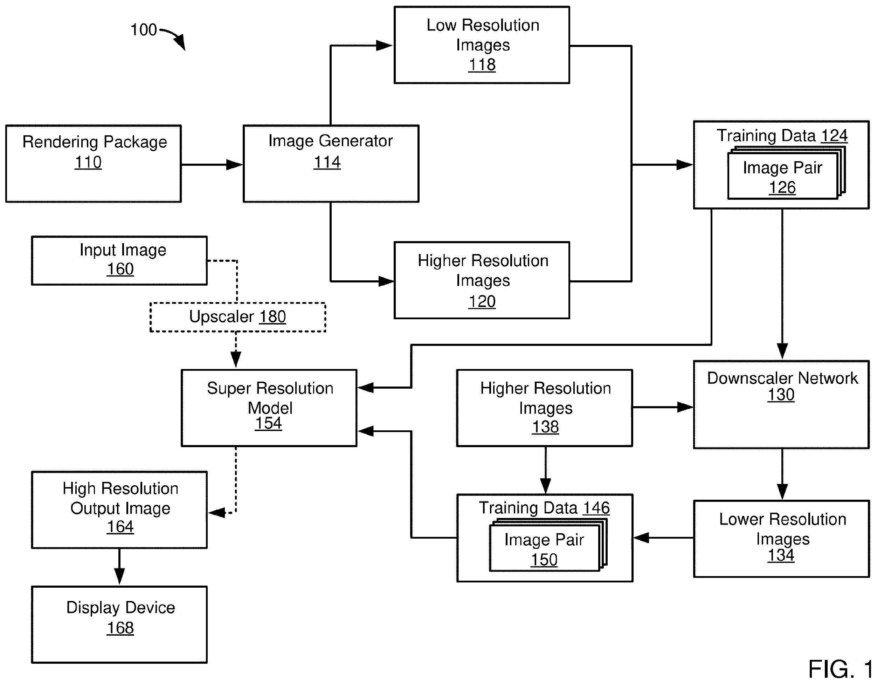

FIG. 1 illustrates an example computing environment 100 and associated components in an example implementation of disclosed techniques. The discussion below introduces how training data is obtained for a super-resolution model. While the characteristics and structures of super-resolution models are detailed later, this example focuses on how high- and low-resolution image pairs are generated and used to improve model performance.

In FIG. 1, a rendering package 110 is provided to an image generator 114, such as a game engine. The image generator 114 processes input scene data and applies a rendering pipeline that transforms this data into output images, producing both high-resolution images 120 and low-resolution images 118 via separate processing pipelines. Each pipeline may include multiple stages, such as geometry processing, shading, lighting calculations, and post-processing effects, which collectively define how the final images are produced.

The image generator 114 is configured with two processing pipelines, where one pipeline produces low-resolution images 118 and the other pipeline produces high-resolution images 120. These images form correlated image pairs that are then used in training processes. The rendering package 110 provides that the same scene content is rendered at different resolutions while maintaining identical camera perspectives, lighting conditions, and object placements. By eliminating, or at least reducing, variability that could arise from frame timing differences or non-deterministic rendering behaviors, the generated image pairs serve as high-quality inputs for training both the downscaler network 130 and the super-resolution model 154.

It should be noted that high resolution and low resolution do not require any specific values. That is, a low, or lower, resolution image 118 is an image that has a lower resolution than another image with which it is being compared, such as a high-resolution image 120.

A rendering package is a curated, self-contained collection of assets, configurations, and scripts that are processed and rendered live by a game engine. It is structured to eliminate variability arising from user actions or non-deterministic behaviors, ensuring consistent output for reproducibility, benchmarking, or feature demonstration. Rendering packages typically include static assets such as high-quality 3D models, textures, and materials that are pre-configured with shaders and surface properties. Animations are predefined, whether through keyframing or procedural generation, and scripts govern the sequence of actions within the scene, such as camera movements, lighting changes, or environmental effects.

Lighting is a key component of the rendering package, often configured to showcase global illumination, dynamic shadows, or other advanced rendering techniques. Scenes may include pre-baked physics simulations to produce consistent behavior, particularly for elements like rigid body dynamics or cloth interactions. Particle effects, such as fire, smoke, or water, are carefully tuned to produce deterministic results, often through the use of seeded randomness. Audio elements are also typically included, with synchronized sound effects or background music designed to complement the visuals.

To facilitate the generation of correlated high- and low-resolution image pairs without introducing inconsistencies from time-dependent effects, the rendering package may operate in a "frozen time" mode during rendering. Freezing time involves intercepting or overriding the simulation clock's internal update mechanism to maintain a constant simulation time value during rendering passes. This technique prevents the engine from advancing the simulation clock between rendering passes, thereby locking dynamic scene elements, such as animations, physics interactions, and particle effects, to the same moment in the simulation timeline.

The simulation clock, typically implemented as a continuously incrementing counter or timestamp, is paused by holding its value at a fixed point determined by the target frame or scene state. This freezing mechanism may be implemented by modifying the game engine's core loop to suspend simulation time updates, overriding the simulation time progression logic, or intercepting frame timing APIs to maintain a static time value across multiple rendering passes. In some implementations, time-step values for physics engines may be explicitly held constant to prevent divergence in rigid body dynamics, while particle systems and animations can be paused by locking the simulation's elapsed time to a specific frame index.

When freezing time is applied, dynamic effects such as procedural animations, physics-based simulations, and particle evolutions remain in a static state across different resolution passes. This approach eliminates variability introduced by time-based changes between high- and low-resolution frames and avoids the need for explicitly synchronizing random number generators, physics states, or animation sequences.

In the absence of freezing time, even small time discrepancies between rendering passes can introduce inconsistencies that propagate through physics simulations, alter particle trajectories, or cause subtle variations in animation states. Such inconsistencies could lead to training data misalignment, potentially degrading the performance of the resulting super-resolution model. By contrast, maintaining a frozen simulation clock guarantees that all rendered frames accurately reflect the same point in time, enabling the generation of high-quality, time-aligned training data for subsequent model training.

The rendering package includes a predefined camera path or set of views that direct attention to specific aspects of the scene. It maintains consistency by locking key settings such as resolution, physics time steps, and rendering parameters. In some implementations, freezing time may be used in conjunction with these settings to further maintain frame consistency across different rendering passes. Physics simulations, time-dependent effects, and random number generators may be controlled to reduce variability between frames. Metadata is often included to document the rendering environment, such as random seed values, engine version information, and configuration logs, further enhancing reproducibility.

A rendering package is non-interactive, relying on pre-scripted behavior to eliminate variability. It is designed to produce deterministic output, where the same input conditions result in identical frames, for a given resolution. While rendering packages are useful for generating high-quality training data, their availability is often limited, and producing them can be resource-intensive and time-consuming. Accordingly, alternative approaches such as capturing frames from live gameplay and generating synthetic training data using a downscaler network can provide additional training data to improve the performance and adaptability of a super-resolution model.

In addition to the use of rendering packages, disclosed techniques also allow for capturing frames from live gameplay to generate additional training data. This is accomplished using a separate tool in the processing pipeline that hooks into the rendering process of a running game. The tool monitors draw calls or frame buffer updates within the rendering pipeline and captures the final rendered frame before it is displayed. This approach provides training data based on real-time gameplay conditions rather than pre-scripted rendering scenarios.

The captured high-resolution frames are then processed using the downscaler network 130, producing corresponding low-resolution images 134 that mimic the characteristics of native low-resolution images generated by the image generator 114. In one implementation, the resulting image pairs supplement those directly obtained from rendering packages 110, forming training datasets 124 and 146. These datasets allow for broader training coverage across different rendering conditions, so that the super-resolution model 154 generalizes effectively to real-world image inputs. In other scenarios, only the low-resolution images 134 and their corresponding high-resolution images are used for training.

Similarly, training data 146 is generated when high-resolution images 138 are processed using the downscaler network to create additional image pairs 150 for training a super-resolution model 154. This can be particularly useful for handling dynamic elements that may not be fully represented in pre-rendered datasets, such as variations in real-time lighting, procedural textures, or physics-based animations. The use of gameplay-derived frames expands the diversity of training data, potentially improving the model's ability to handle a wider range of in-game visual scenarios.

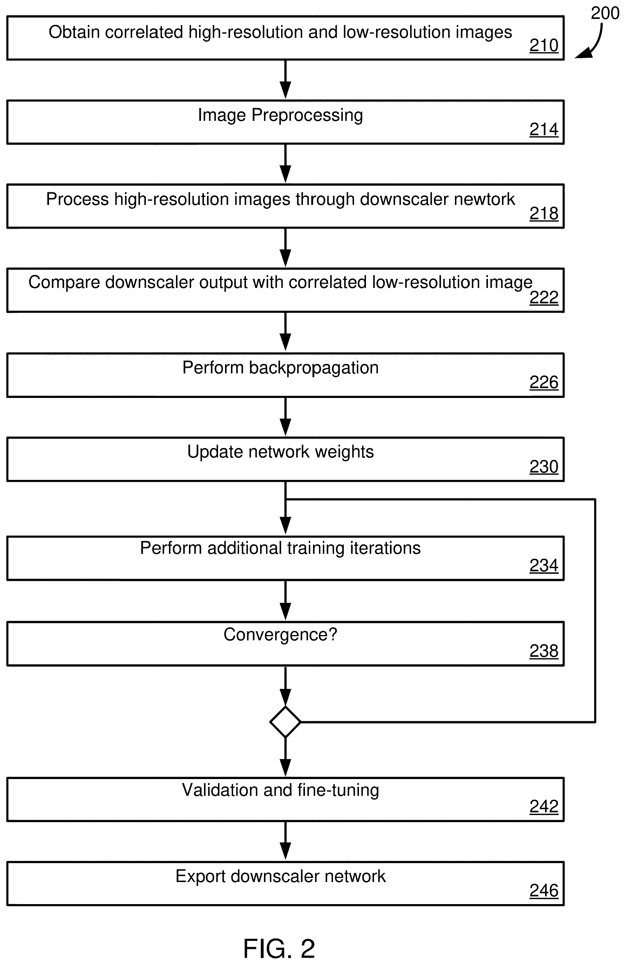

FIG. 2 illustrates a detailed training process 200 for a downscaler network. At 210, correlated pairs of high-resolution (HR) and low-resolution (LR) images are obtained from a dual-resolution rendering pipeline, such as previously described. Each rendering event produces two images representing identical scenes at different resolutions. These correlated image pairs are stored in high-precision image formats to retain maximum image fidelity. Depending on the target dynamic range, different file formats and bit depths may be used. For Standard Dynamic Range (SDR) scenarios, 8-bit per channel PNG files are used, while for High Dynamic Range (HDR) scenarios, images are stored using 16-bit floating-point precision (float16) in OpenEXR format. The use of float16 and OpenEXR for HDR images preserves a wider range of luminance and color data, capturing high-frequency details and preventing the loss of subtle variations that might occur with lower-precision formats.

File naming conventions can be used to associate corresponding high-resolution and low-resolution image pairs. For example, frame_001_high.png may correspond to a high-resolution image saved as an 8-bit PNG for SDR scenarios, while frame_001_low.png represents the corresponding low-resolution image. Similarly, for HDR scenarios, frame_001_high.exr and frame_001_low.exr may denote high- and low-resolution image pairs stored in OpenEXR format. In addition to file naming, rendering metadata detailing parameters such as camera positions, physics states, random seeds, and lighting settings is recorded within structured JSON files. This metadata facilitates accurate pairing and consistency verification for training data.

At 214, preprocessing procedures prepare image pairs for network training. Pixel values in each image are normalized to fall within a numerical range of [0, 1]. For example, pixel normalization involves dividing pixel values by 255.0 for standard 8-bit images. Alternatively, mean-standard deviation normalization may be performed, calculated by subtracting the dataset mean and dividing by the dataset standard deviation for each pixel.

Additionally, images are formatted by resizing or cropping to match precise input-size constraints required by the downscaler network. For example, high-resolution images may be resized from 3840×2160 pixels to 1920×1080 pixels, matching the corresponding native low-resolution images. Image pairs are grouped into mini-batches of 32 correlated image pairs each, structured to optimize computational efficiency and data diversity within each training iteration.

At 218, high-resolution images undergo a forward pass through a downscaler network based on a modified Enhanced Deep Super-Resolution (EDSR) architecture adapted for downscaling tasks. The downscaler network includes thirty-two residual blocks, each residual block comprising 128 convolutional feature channels. Batch normalization layers from the original EDSR model are removed to enhance computational efficiency and avoid feature distribution complications.

To adapt EDSR for downscaling, the original scaling module designed for 2× upscaling is modified to perform downscaling instead. This modification can include convolutional layers configured with strides greater than one, thereby reducing image spatial dimensions, or pooling layers integrated into the network. In addition to these modifications, standard mathematical downscaling methods, such as Lanczos, bilinear, and bicubic interpolation, may be applied to further reduce image resolution. These methods, while computationally less complex than learned convolutional layers, can generate low-resolution images that serve as effective approximations for training purposes. All other architectural features, including convolutional layers, activation functions, and skip connections, remain identical to those in the original EDSR architecture.

At 222, loss functions are computed to evaluate differences between the predicted low-resolution images generated by the downscaler network and corresponding ground-truth low-resolution images from the dataset. A pixel-level L1 loss (mean absolute error) quantifies per-pixel absolute differences according to the formula: ${L}_{L 1} = \frac{1}{N} {\sum }_{i = 1}^{N} \left|{LR}_{ground truth}^{\left(i\right)}-{LR}_{predicted}^{\left(i\right)}\right|$ where *N* represents the total number of pixels in each image.

Additionally, perceptual loss is computed using a pre-trained neural network, such as VGG-19 trained on image classification tasks. Perceptual loss measures high-level visual similarities by extracting intermediate feature representations from both ground-truth and predicted low-resolution images and calculating the mean squared error between these feature representations according to the following formula: ${L}_{perceptual} = {\sum }_{l} \frac{1}{{H}_{l} {W}_{l} {C}_{l}} {\left‖{Φ}_{l}\left({LR}_{ground truth}\right)-{Φ}_{l}\left({LR}_{predicted}\right)\right‖}^{2}$ where Φ*ₗ* represents feature extraction at layer *l* l of the VGG-19 network, and *HₗWₗCₗ* denotes the height, width, and channel dimensions of the respective feature maps. These loss functions are combined using a weighted sum, for example, *l = αL*_{*L*1} *+ βL_{perceptual},* with weights *α* = 0.8and *β* = 0.2, determined through empirical tuning for structural accuracy and prediction quality.

At 226, gradients of the combined loss function are computed via backpropagation. This calculation involves determining partial derivatives of the combined loss with respect to each individual weight parameter within the network, using the chain rule to propagate errors backward through the network layers. Gradients are computed as: $\frac{\partial L}{\partial w} = \frac{\partial L}{\partial output} ⋅ \frac{\partial output}{\partial w}$

At 230, the Adam optimizer updates network weights based on the computed gradients. Hyperparameters for the Adam optimizer include an initial learning rate of 1 x 10⁻⁴, with adaptive learning rate adjustments computed based on historical gradient statistics. Additional Adam optimizer hyperparameters include *β*₁ = 0.9, *β*₂ = 0.999, and epsilon = 1 × 10⁻⁸.

At 234, the training process iterates until it is determined at 238 that convergence is achieved. Convergence is evaluated periodically using validation datasets separate from the training dataset, with metrics computed such as Peak Signal-to-Noise Ratio (PSNR) and Structural Similarity Index (SSIM). Training includes multiple epochs and typically extends for precisely 50,000 to 100,000 iterations, each iteration processing one mini-batch of 32 image pairs.

At 242, after convergence determination, further validation and fine-tuning take place. Validation involves applying the trained downscaler network to a previously unseen validation dataset, again computing quantitative metrics like PSNR and SSIM to assess model generalizability. Fine-tuning uses targeted datasets closely matching expected deployment scenarios to further refine network weights.

At 246, the trained and validated downscaler network 130 is exported into a deployment-compatible format, such as ONNX or TensorRT. Deployment involves installing the trained model on computing systems distinct from training hardware, such as gaming consoles or personal computers. In deployment scenarios, the downscaler network 130 processes high-resolution content to generate corresponding low-resolution images useful for further super-resolution model training, significantly enriching available training data.

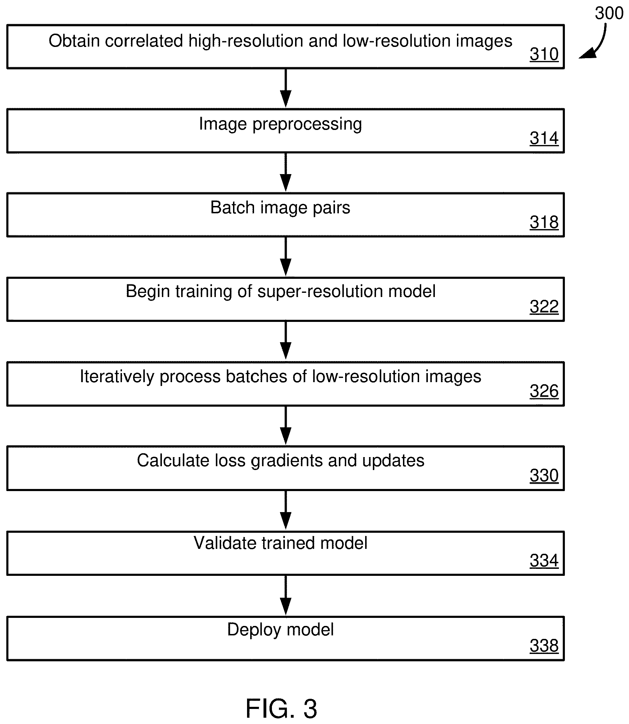

FIG. 3 illustrates an example training process 300 for a super-resolution model 154. At 310, high-resolution images and corresponding low-resolution images are obtained from an image generator configured with a dual-resolution rendering pipeline. In this configuration, the image generator, such as a game engine, simultaneously outputs high-resolution and corresponding low-resolution versions of identical scene content from a single rendering event. For each rendered scene frame, two output images are generated-a high-resolution version and a correlated low-resolution version. The high-resolution and low-resolution images are stored together as corresponding image pairs. These image pairs may be stored using structured file-naming conventions, such as "frame_001_high.png" paired with "frame_001_low.png," to clearly associate each high-resolution image with its low-resolution counterpart. Images may be saved in a high-precision file format such as OpenEXR or 16-bit PNG to preserve image quality.

At 314, the collected image pairs undergo preprocessing to prepare them for training. Preprocessing includes normalizing each image's pixel values by scaling them to a numerical range between 0 and 1. In some implementations, mean normalization may alternatively be applied, where pixel values are standardized by subtracting the dataset mean and dividing by the dataset standard deviation. Additionally, images may be resized, cropped, or otherwise formatted to match input size constraints of the super-resolution model, such as 64x64 pixels for RGB images.

At 318, batches of image pairs are formed, where each mini-batch includes approximately 32 correlated image pairs per iteration. The mini-batch structure facilitates efficient use of computational resources during training and helps provide sufficient data diversity within each iteration.

At 322, training the super-resolution model begins. The super-resolution model 154 employs a convolutional neural network (CNN) architecture built upon deep residual learning frameworks, such as Enhanced Deep Super-Resolution (EDSR). This CNN structure includes multiple layers designed for feature extraction, typically consisting of an input convolutional layer, multiple deep residual blocks, and a final output convolutional layer. For implementations performing direct upscaling, a sub-pixel convolutional layer may be integrated to upscale intermediate feature maps to a target high-resolution size. However, this may be omitted in scenarios where no resolution change is performed.

At step 326, the model iteratively processes batches of low-resolution images, generating enhanced images that are compared to corresponding high-resolution images in the training data. During each iteration, multiple loss functions quantify differences between the generated output and ground-truth high-resolution images. These loss functions include pixel-wise loss functions, such as L1 loss, which computes a per-pixel absolute difference: ${L}_{L 1} = \frac{1}{N} \sum \left|{I}_{HR}-{I}_{SR}\right|$

Additionally, mean squared error (MSE) loss may alternatively be used, calculated as: ${L}_{MSE} \frac{1}{N} \sum {\left|{I}_{HR}-{I}_{SR}\right|}^{2}$

Perceptual loss, computed based on differences in higher-level features extracted from an intermediate layer of a pre-trained neural network, such as VGG-19 trained on image classification tasks, is also utilized: ${L}_{perceptual} = {\sum \left‖{Φ}_{l}\left({I}_{HR}\right)-{Φ}_{l}\left({I}_{SR}\right)\right‖}^{2}$

In some implementations, an adversarial loss may be employed, implemented via a Generative Adversarial Network (GAN) framework. In such a configuration, the super-resolution model functions as the generator, and a discriminator separately evaluates the authenticity of generated high-resolution images. The discriminator assesses generated images against ground-truth high-resolution images, guided by an adversarial loss function defined as: ${L}_{GAN} E \left[logD\left({I}_{HR}\right)+E\left[log\left(1-D\left({I}_{SR}\right)\right)\right]\right]$

Furthermore, total variation (TV) loss may be applied to reduce noise and unnatural artifacts by encouraging spatial consistency, computed as: ${L}_{TV} = {\sum }_{i , j} \left({\left({I}_{i , j + 1}-{I}_{i , j}\right)}^{2}+{\left({I}_{i + 1 , j}-{I}_{i , j}\right)}^{2}\right)$

At 330, differences quantified by the loss functions are used to calculate gradients for each weight within the neural network layers via backpropagation. Gradient computation involves determining partial derivatives of the loss functions with respect to each weight, propagating the error backward through the network using the chain rule. The Adam optimizer is employed to update the model weights based on these gradients, using adaptive learning rates derived from estimates of the gradients' first moment (mean) and second moment (variance). The Adam optimizer typically applies hyperparameters such as β₁ = 0.9, β₂ = 0.999, and epsilon = 1e-8.

The training process continues iteratively through many batches and epochs until convergence is achieved. Convergence is assessed using quantitative metrics such as Peak Signal-to-Noise Ratio (PSNR) and Structural Similarity Index (SSIM), computed over a separate validation dataset that the model has not previously encountered during training. Commonly, tens of thousands of training iterations (e.g., between 50,000 to 100,000 iterations) are performed, each iteration typically including processing of approximately 32 image pairs.

At 338, after convergence, the trained model undergoes validation using additional, previously unseen high- and low-resolution image pairs to evaluate its performance. The model may also be fine-tuned using additional targeted datasets that closely match the expected deployment conditions.

At 342, upon completion of training and fine-tuning, the final super-resolution model 154 may be deployed. Deployment involves installing the trained model on target computing systems, where it is integrated into rendering pipelines. In deployment, the trained model accepts input images from an image generator, processes these images to enhance sharpness, reduce artifacts, and improve visual clarity, and provides the enhanced images for rendering on a display device. Deployment often occurs on different hardware than used for training, such as gaming consoles, personal computers, or mobile devices, configured to execute the model in real-time with sufficient computational resources.

Returning to FIG. 1, the training data 124 is used to train the downscaler network 130, while the training data 150 is used to train the super-resolution model 154. In some cases, additional training data may be introduced for training the super-resolution model 154, such as data generated using correlated frames from rendering packages.

In use, the super-resolution model 154 can be applied in different ways, depending on the specific deployment scenario. In some configurations, input images 160, such as from a game engine, are low-resolution images that are provided to the super-resolution model 154, which generates high-resolution output images 164 - performing upscaling that includes improvements to image quality.

In other configurations, the super-resolution model 154 is applied to already high-resolution input images 160, refining details, improving texture clarity, and reducing rendering artifacts without changing the image resolution. The ability to apply the super-resolution model 154 in either mode allows for flexibility in improving visual fidelity across different rendering conditions.

Image generators 114 have resolution limits, although an image generator may be capable of rendering at multiple qualities within its range. To improve performance, the downscaler network 130 typically is configured to produce low-resolution images 134 that have the same, or close to, the resolution of the input images 160 provided to the super-resolution network 154 during use.

As illustrated in FIG. 1, in some implementations, the super-resolution model 154 does not perform direct upscaling. Instead, an external upscaler 180 may first resize the input image 160 to the target resolution before it is processed by the super-resolution model 154, which refines the image to enhance sharpness and visual clarity, producing a high-resolution output image 164 for display on a display device 168. For example, upscaling can be performed at a fixed scale factor of 2X, meaning that input images 160 are first resized to twice their original resolution before undergoing super-resolution processing.

In some cases, the super-resolution model 154 may also be applied to images that are already at a high-resolution target, where it enhances detail and reduces artifacts rather than increasing image resolution. This enhancement occurs because, even when no upscaling is performed, the super-resolution model leverages learned patterns from its training on low- and high-resolution image pairs to improve image sharpness, reduce noise, and refine fine textures.

In some implementations, the super-resolution model 154 is configured for enhancing image details without performing a resolution increase. In this configuration, the input and output image resolutions are matched, for instance, at 3840×2160 pixels, and the model architecture is specifically modified to remove any final upsampling components. For example, the sub-pixel convolution layers typically used for upscaling tasks are omitted, resulting in a streamlined pipeline: input convolutional layers, residual blocks, and a final output convolutional layer with no resolution change.

To implement this configuration, hyperparameters controlling scaling are adjusted, such as setting a scaling parameter to a value of 1.0 in the model's configuration settings or parameter files. As a result, input images supplied to the model have resolutions matching exactly the model's output target resolution. These images, which may originate from a high-resolution image generator like a game engine operating at native resolutions, undergo preprocessing steps prior to model input. Preprocessing includes normalization, scaling pixel intensity values to a numerical range between 0 and 1. In certain implementations, denoising preprocessing algorithms, such as Non-Local Means or Block-Matching 3D (BM3D) filtering, may be applied to mitigate severe noise that could negatively influence the model's detail refinement process.

During the enhancement process, the super-resolution model 154 applies convolutional layers configured to extract and represent intricate image features, such as edges, textures, and small-scale visual details. These convolutional layers use filter sizes of 3×3 pixels and apply activation functions, either ReLU or Leaky ReLU, to emphasize non-linear feature distinctions critical to detail enhancement. The trained model leverages learned feature patterns derived during training from correlated high- and low-resolution image pairs, specifically targeting refinement of textural detail, sharpness of edges, and suppression of rendering artifacts such as aliasing and compression-induced artifacts.

Loss functions used in this detail-enhancement scenario without resolution change are carefully selected to optimize visual quality. Pixel-wise losses, such as Mean Absolute Error (L1 Loss), directly quantify per-pixel accuracy between generated and ground-truth images, represented mathematically as: ${L}_{L 1} = \frac{1}{N} {\sum }_{i = 1}^{N} \left|{I}_{GT}\left(i\right)-{I}_{Enhanced}\left(i\right)\right|$

Perceptual loss functions supplement pixel-level accuracy by evaluating differences in high-level features extracted from intermediate layers of pretrained convolutional neural networks, like VGG-19. The perceptual loss measures structural and textural similarity: ${L}_{perceptual} = {\sum }_{l} {\left‖{Φ}_{l}\left({I}_{GT}\right)-{Φ}_{l}\left({I}_{Enchanged}\right)\right‖}^{2}$

In implementations utilizing Generative Adversarial Networks (GAN), adversarial loss guides the model toward producing visually realistic outputs indistinguishable from authentic high-resolution images. This adversarial loss involves a discriminator network distinguishing real from generated images, computed as: ${L}_{GAN} E \left[logD\left({I}_{GT}\right)+E\left[log\left(1-D\left({I}_{Enhanced}\right)\right)\right]\right]$

Additionally, Total Variation (TV) loss is applied to promote spatial consistency and smoothness, reducing noise and unnatural artifacts by penalizing abrupt changes in pixel intensity values between neighboring pixels: ${L}_{TV} = {\sum }_{x , y} \left({\left({I}_{x , y + 1}-{I}_{x , y}\right)}^{2}+{\left({I}_{x + 1 , y}-{I}_{x , y}\right)}^{2}\right)$

Optimization of the super-resolution model involves iterative enhancement, where batches of input images are processed, and enhanced outputs are compared against corresponding ground-truth images using the defined loss functions. Losses computed from these comparisons generate gradients via backpropagation, calculating partial derivatives with respect to each model parameter. Optimization methods, such as the Adam optimizer configured with hyperparameters β₁=0.9, β₂=0.999, and epsilon=1e-8, use these gradients to update convolutional layer weights, thereby refining the model's performance.

Post-processing may be applied following the enhancement to further refine the visual quality of images. This post-processing includes applying subtle sharpening filters, such as unsharp masking or Laplacian filters, selectively emphasizing fine image details. Minor color or contrast corrections, such as gamma adjustments, may also be performed post-model processing to help provide perceptual consistency and visual attractiveness.

Performance validation of the configured no-scale enhancement model is conducted using quantitative metrics such as Structural Similarity Index (SSIM), assessing perceptual similarity improvements, and Peak Signal-to-Noise Ratio (PSNR), quantifying pixel-level accuracy. Additionally, qualitative assessments by experts or user studies validate perceptual enhancements, confirming improvements in detail sharpness, artifact reduction, and overall image clarity.

Additionally, a system implementing the super-resolution model 154 can evaluate the hardware and software capabilities of the device on which images will be rendered before enabling the feature. Such capabilities may include processing power (e.g., GPU or CPU performance), available memory, and supported image formats. The device may also be constrained to a predefined set of resolutions. If a device does not meet the necessary performance or capability requirements (including resolution), the super-resolution process is disabled, and the original image is rendered without enhancement.

A system implementing the super-resolution model evaluates the hardware and software capabilities of the device on which images will be rendered before determining whether to enable or disable the model. This evaluation occurs when the super-resolution model is first loaded, or periodically during operation, such as when a new rendering session begins, system hardware or software is updated, or a user modifies graphical settings. The system queries device information using OS-level system calls, driver-level APIs, and benchmark-based profiling.

Hardware specifications, such as GPU type, available memory, and compute API support, are retrieved using system commands or graphics driver APIs. These include DXGI_ADAPTER_DESC for DirectX, VkPhysicalDeviceProperties for Vulkan, and CUDA device properties for NVIDIA GPUs. The retrieved information is stored in a device capability profile in a structured metadata format, such as JSON or XML.

If real-time inference performance falls below a predefined threshold-such as exceeding a frame time budget of 16 milliseconds-the system dynamically adjusts the processing load. Adjustments may include reducing inference frequency by skipping every other frame, lowering model precision from FP32 to FP16 or INT8, or reducing the number of active convolutional layers. These optimizations allow the model to adapt to varying hardware constraints without completely disabling super-resolution enhancement.

Device specifications are retrieved by querying system components. The GPU compute capability is verified to determine whether the device can perform accelerated super-resolution processing. The GPU architecture version is checked using CUDA compute capability or Vulkan API properties. If the GPU does not meet the required compute capability, the super-resolution model is disabled. The following example illustrates CUDA-based capability verification:

```
       int device;
       cudaDeviceProp prop;
       cudaGetDevice(&device);
       cudaGetDeviceProperties(&prop, device);
       if (prop.major < 7) { // Requires CUDA Compute Capability 7.0 or higher
          disable_super_resolution();
       }
```

Available GPU memory is checked to determine whether sufficient resources exist for executing the model. The model may require 8GB of VRAM for full-resolution processing. If less memory is detected, the super-resolution model is disabled, or a lower-precision mode is activated. The following example illustrates a CUDA memory check:

```
       size_t free_mem, total_mem;
       cudaMemGetInfo(&free_mem, &total_mem);
       if (free_mem < (8 * 1024 * 1024 * 1024)) { // 8GB threshold
          disable_super_resolution();
       }
```

CPU processing power is assessed as a fallback in case GPU acceleration is not available. The system verifies SIMD instruction support, such as AVX2 or AVX-512, and executes a benchmark-based profiling test to measure inference latency. If CPU-based processing exceeds 16 milliseconds per frame, the model is disabled. System memory availability is checked to confirm whether the available RAM can support inference. In an implementation, the model requires 8GB for FP32 inference, 4GB for FP16, and 2GB for INT8 quantized inference. If insufficient memory is detected, a quantized model may be loaded instead.

Storage performance is evaluated if the system lacks sufficient RAM and relies on disk-based paging. Storage bandwidth is measured to determine whether disk swapping introduces excessive latency. HDD-based systems may cause unacceptable performance degradation, leading to disabling of the model.

Graphics API and driver compatibility are verified by querying supported API versions for DirectX, Vulkan, and Metal. The following example illustrates Vulkan API verification:

```
       uint32_t instance_extension_count = 0;
       vkEnumerateInstanceExtensionProperties(nullptr, &instance_extension_count,
       nullptr);
       if (instance_extension_count == 0) {
          disable_super_resolution();
       }
```

Neural network inference backends are checked. If TensorRT, ONNX Runtime, or CoreML support is not detected, the system may attempt a fallback to CPU-based inference or disable the model entirely.

The maximum supported rendering resolution of the device is verified. The framebuffer resolution constraints are retrieved, and if the model is trained for 4K output but the device's maximum resolution is only 1080p, the model is disabled. The system checks image format compatibility. If the rendering pipeline does not support the required FP16 EXR or HDR10 formats, the system may lower processing precision to match supported formats.

A capability score is computed based on the retrieved hardware and software data. The score is calculated using a weighted formula: $S = {w}_{1} \left(GPU\right) + {w}_{2} \left(CPU\right) + {w}_{3} \left(RAM\right) + {w}_{4} \left(API_compatibility\right) + {w}_{5} \left(storage\right)$

The following example illustrates a Python function computing the capability score:
def compute _capability_score(gpu, cpu, ram, api, storage):
weights = [0.4, 0.2, 0.2, 0.1, 0.1]
return sum([gpu * weights[0], cpu * weights[1], ram * weights[2], api * weights[3], storage * weights[4]])

If the computed score falls below a predefined threshold, the model is disabled. The system logs the evaluation results and notifies the user if the super-resolution model is disabled due to insufficient hardware capabilities. The following example illustrates a log entry:
[2025-03-10 12:00:00] Super-Resolution Model Disabled: Insufficient VRAM (4GB detected, 8GB required).

If full-resolution processing is not feasible, model parameters are dynamically adjusted. The system may reduce bit-depth precision from FP32 to FP16 or INT8, use a shallower network architecture for less computational load, or enable frame skipping by processing every second frame instead of every frame. The following example illustrates dynamic precision adjustment:

```
       if available_vram < 8 * 1024 * 1024 * 1024:
          model.precision = "FP16"
```

If real-time inference is not achievable, adaptive processing techniques may be activated. These may include reducing texture enhancement intensity or lowering the number of convolutional layers used in real-time processing.

On resource-constrained devices such as embedded systems, mobile devices, or gaming consoles with limited processing power, additional optimizations are performed. The system may automatically switch to an optimized version of the model that is pre-trained using lower computational complexity. Quantization techniques may be applied to reduce memory footprint and computational demand. The model weights may be converted from 32-bit floating point precision to 16-bit or 8-bit fixed-point representation using techniques such as TensorFlow Lite quantization or NVIDIA TensorRT. The following example illustrates how quantized models may be loaded:

```
       if device_type == "mobile":
          model.load_quantized("model_int8.tflite")
       else:
          model.load_full_precision("model_fp32.onnx")
```

The inference batch size is dynamically reduced if system memory is low. If a standard inference process is designed to run on batches of 16 frames, batch size may be reduced to 4 frames on memory-limited devices.

To improve execution efficiency on lower-powered devices, model distillation techniques may be applied. A smaller, student model is trained to approximate the behavior of a larger, high-fidelity teacher model. The student model is optimized for real-time processing by removing redundant layers and reducing the number of parameters.

Power consumption is considered in environments where energy efficiency is a concern. For battery-powered devices such as mobile gaming platforms, inference frequency is adjusted to avoid excessive power drain. Instead of processing every frame, inference may be applied intermittently at a lower frame rate.

As shown in FIG. 1, in some implementations, the super-resolution model 154 does not directly perform upscaling. Instead, an external upscaler 180 first resizes the input image 160 to the target resolution before it is processed by the super-resolution model 154. This configuration allows the super-resolution model 154 to focus on refining image details, enhancing sharpness, and reducing artifacts while maintaining the target resolution. The resulting high-resolution output images 164 are then passed to the display device 168 for final rendering

For example, upscaling can be performed at a fixed scale factor of 2X, meaning that input images are first resized to twice their original resolution before undergoing super-resolution processing. In some cases, a system implementing the super-resolution model 154 can evaluate the capabilities of the device on which images will be rendered before enabling the feature, and the device only supports a predefined set of resolutions. If a device does not meet the necessary requirements, the super-resolution process is disabled, and the original image is rendered without enhancement.

The downscaler network 130 can be similarly constrained by operating at a fixed scale factor that is predefined based on the supported devices. Because the targeted resolutions are known in advance, the downscaler network is configured to generate low-resolution images that match the expected input resolution of the super-resolution model. By maintaining a fixed scaling approach for both downscaling and super-resolution, the training data reflects real-world rendering conditions, allowing the super-resolution model 154 to be optimized for the specific resolution ranges supported by the system.

The resolution at which the super-resolution model operates can be configured based on the target deployment environment. This configuration can occur at different stages of the model's lifecycle. In some cases, the resolution constraint is established during training, where the model is trained exclusively on image pairs corresponding to the maximum supported resolution of the target device. Alternatively, the model may be trained on a broader range of resolutions, and the applicable resolution is set at runtime based on system constraints. For example, the model may include a hyperparameter that determines the maximum output resolution, which can be adjusted dynamically based on the device onto which the model is deployed. This allows a single trained model to support multiple deployment scenarios, such as applying one resolution constraint when deployed on a gaming console and a different constraint when deployed on a high-end PC. Additionally, in some implementations, an external software component-such as a game engine, rendering pipeline, or driver-level configuration-can impose the resolution constraint.

The disclosed techniques have additional advantages. For example, a high-quality, more complex downscaler network 130 can be used because it is not required that the training data 150 be generated in real time. In contrast, the super-resolution model 154 is designed for real-time operation and is typically deployed, such as to a gaming device, to enhance images during use. However, in some implementations the downscaler network 130 is only used during training to generate training data and does not need to be deployed. This allows the downscaler network 130 to be optimized for accuracy and complexity without concern for real-time processing constraints. Additionally, downscaling is generally a less computationally intensive process than super-resolution, making the downscaler network 130 easier to train while still producing effective training data that improves the performance of the super-resolution model 154.

Another advantage of generating training data 150 using the downscaler network 130 is that it allows for customized training of the super-resolution model 154, which can produce models that are more accurate for specific use cases. That is, if only training data 124 is available, the images in the image pairs 126 may be less representative of those that will serve as input to the super-resolution model 154 during use, such as based on the limited availability of rendering packages 110. The high-resolution images 138 can be selected to be representative of a particular use. For example, a super-resolution model 154 can be trained using training data 150 that corresponds to actual output of a particular game title with which the super-resolution model with be used. If desired, the super-resolution model 154 can be trained with the training data 150, but not the training data 124 (or at least not all of such training data), to improve the specificity of the super-resolution model for a particular use. For example, a user responsible for training the super-resolution model 154 can select what data to be used for training.

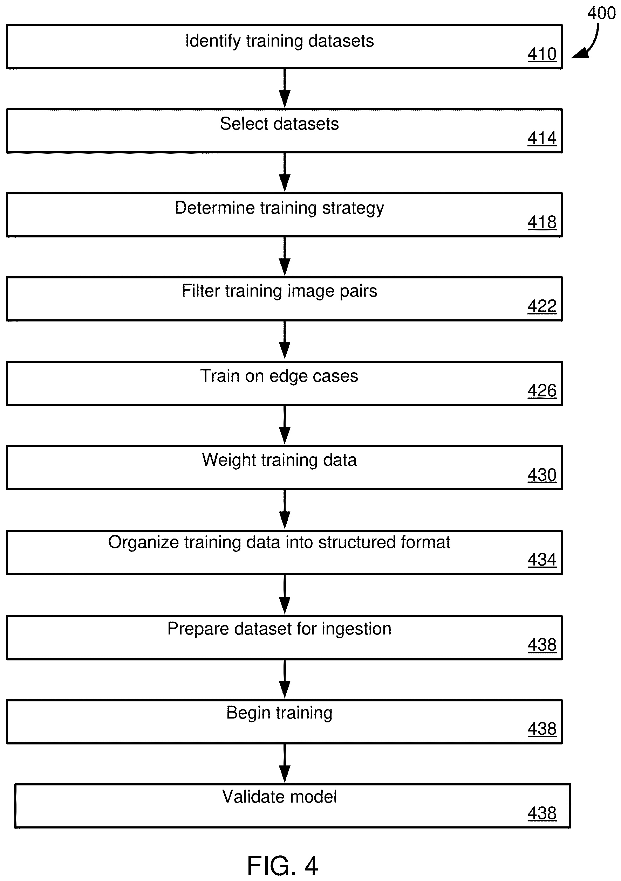

The selection of training data for the super-resolution model influences both its ability to generalize across multiple rendering conditions and its specificity for a particular use case. FIG. 4 illustrates an example process 400 for selecting training data. The selection process includes determining whether to use native image pairs obtained directly from an image generator, such as a game engine, or to use additional image pairs in which the low-resolution image is generated by a downscaler network trained on similar content.

At 410, potential training datasets are identified. Two primary sources of image pairs are considered: (1) correlated high- and low-resolution image pairs obtained directly from an image generator (dataset 124) and (2) high-resolution images with corresponding low-resolution images produced by a downscaler network (dataset 146 of FIG. 1). Each dataset provides distinct advantages and limitations based on the intended deployment conditions of the super-resolution model.

At 414, selection criteria are applied to determine whether native image pairs or downscaler-generated image pairs are used. In applications where the target deployment conditions closely match a specific game engine or rendering system, training may favor native image pairs to ensure that the super-resolution model learns from actual rendering artifacts. This is particularly useful when the native image pairs capture specific aliasing effects, texture filtering patterns, or motion blur characteristics that are unique to a given rendering pipeline. Alternatively, if a large, diverse dataset is required to improve generalization across multiple rendering pipelines, downscaler-generated image pairs may be used, as they allow augmentation of the dataset by synthetically generating additional low-resolution images from pre-existing high-resolution content.

At 418, a hybrid approach may be adopted to balance specificity and generalization. In such an approach, training begins with a dataset primarily composed of native image pairs to anchor the model's understanding of real-world rendering properties. Over the course of training, downscaler-generated image pairs are gradually introduced to expand the dataset while preserving the core characteristics learned from the native image pairs. The ratio of native to downscaler-generated image pairs may be dynamically adjusted based on validation performance.

An automated selection system monitors validation loss across different training phases and adjusts sampling distribution accordingly. If native image pairs exhibit consistently lower validation loss, they are prioritized to maintain specificity. If downscaler-generated images improve model generalization without increasing validation loss, they are progressively introduced at an increasing ratio. In implementations with manual selection, a user may modify dataset selection by editing a configuration file, such as training_config.json, specifying weighting parameters for each dataset type.

At 422, image pairs meeting the selection criteria are further filtered using metadata-driven heuristics. Image metadata includes attributes such as resolution, scene conditions, lighting parameters, camera motion, and texture complexity. A selection algorithm automatically prioritizes images that meet predefined resolution constraints for the super-resolution model. For example, if the target deployment involves 1080p rendering on a gaming console, training data may prioritize image pairs where the high-resolution image is 4K and the corresponding low-resolution image is 1080p to reflect the expected input-output relationship.

To avoid misaligned training data, frame correspondence is validated to confirm that each low-resolution image is precisely correlated with its high-resolution counterpart. This validation may include structural similarity checks (SSIM) between an upscaled low-resolution image and the native high-resolution image, ensuring that the low-resolution image accurately represents a degraded version of the high-resolution content. If a mismatch is detected, the image pair is excluded from training. The following automated validation script performs such a check:

```
       if not is_correlated_pair(high_res_img, low_res_img):
          raise Exception("Image misalignment detected: {}".format(image_pair_id))
```

At 426, the dataset is further refined by handling edge cases where low-resolution images generated by the downscaler network may not sufficiently resemble actual low-resolution images produced by the rendering pipeline. To quantify the similarity between native low-resolution images and downscaler-generated low-resolution images, a structural similarity index (SSIM) or peak signal-to-noise ratio (PSNR) may be computed. The following validation process helps provide that downscaler-generated low-resolution images meet a predefined similarity threshold before inclusion in the training dataset:

```
       ssim_score = compute _ssim(real_low_res, downscaler_generated_low_res)
       if ssim_score < threshold:
          discard_image_pair(image_id)
```

At 430, training data is weighted based on its relevance to the deployment conditions. In scenarios where the super-resolution model is intended for a specific game engine, native image pairs may be assigned a higher weighting factor during training. Conversely, if the model is intended to be deployed across multiple rendering engines, downscaler-generated image pairs may be weighted more heavily to increase generalization. A dynamic training regimen may adjust sampling distribution in real time based on validation loss metrics, ensuring that the dataset remains optimized throughout training.

At 434, the selected training data is organized into a structured dataset format. Image pairs are stored in a directory structure designed to facilitate efficient retrieval and batch processing. The dataset organization follows the pattern:

```
       /training_data/
          /native_pairs/
            high/frame_001_high.png
            low/frame_001_low.png
          /downscaler_pairs/
            high/frame_002_high.png
            low/frame_002_low.png
          metadata/frame_001.json
          metadata/frame_002.json
```

For each image pair, a metadata file records attributes such as the dataset source, resolution parameters, scene conditions, and weighting factor for training. The following JSON structure represents a metadata file associated with an image pair:

```
        {
 
          "image_id": "frame _001",
          "dataset_source": "native",
          "resolution_high": [3840, 2160],
          "resolution_low": [1920, 1080],
          "scene_conditions": "daylight, high-motion",
          "weighting_factor": 0.8
       }
```

At 438, the dataset undergoes preprocessing before being used in training. Each image's pixel values are normalized to a numerical range between 0 and 1, or alternatively, mean normalization is applied. Additionally, images are resized to match the input dimensions required by the super-resolution model, and batches of 32 image pairs are formed for efficient training.

At 442, the dataset is prepared for ingestion into the training pipeline. Image pairs are randomly shuffled to prevent the model from overfitting to specific content, and optional augmentation techniques are applied, such as minor brightness, contrast, or rotation adjustments.

At 446, the training process begins using the selected dataset. Initially, training relies primarily on native image pairs, establishing a foundation of real-world rendering artifacts in the model's feature space. As training progresses, downscaler-generated image pairs are gradually introduced to expand the dataset. The following implementation dynamically injects synthetic image pairs into training:

```
for epoch in range(total_epochs):
   if epoch > start_mixed_epoch:
      training_data = mix_datasets(native_pairs, downscaler_pairs, ratio=0.5)
```

At step 450, validation is performed to assess model accuracy on previously unseen data. The dataset composition may be adjusted dynamically based on validation loss trends, optimizing the balance between specificity and generalization. The dataset refinement process continues iteratively until convergence is reached, at which point the model is finalized for deployment.

As described above, downscaler networks of the present disclosure can be sophisticated in that they are trained to produce downscaled images as opposed to using "static" techniques. In some cases, downscaler networks can be generated by essentially reversing the operations of a super-resolution model. A super-resolution-based downscaler network can be paired with a super-resolution model, and can be of the same or different types.

In some implementations, the trained super-resolution model is deployed to a computing device that is different from the computing system used to train the downscaler network. Deployment may involve installing the model as part of a software package on the target system, where it is integrated into a rendering pipeline that takes output images from a game engine, applies the super-resolution model to enhance image quality, and then renders the enhanced images for display. For example, the model may be trained on a high-performance server or cloud infrastructure but later deployed to a device such as a gaming console, personal computer, or mobile device, where it processes input images in real-time. A computing device is considered different when it is a separate physical system or a logically distinct system that operates independently, even if it communicates with other systems over a network.

As used herein, "deploying" a trained super-resolution model refers to making the model available for execution on a computing device different from the device on which it was trained. Deployment may involve transferring the trained model to the device via a network connection, storing the model on the device's local storage, integrating the model into an application executed on the device, or otherwise configuring the device to execute the model for processing input images.

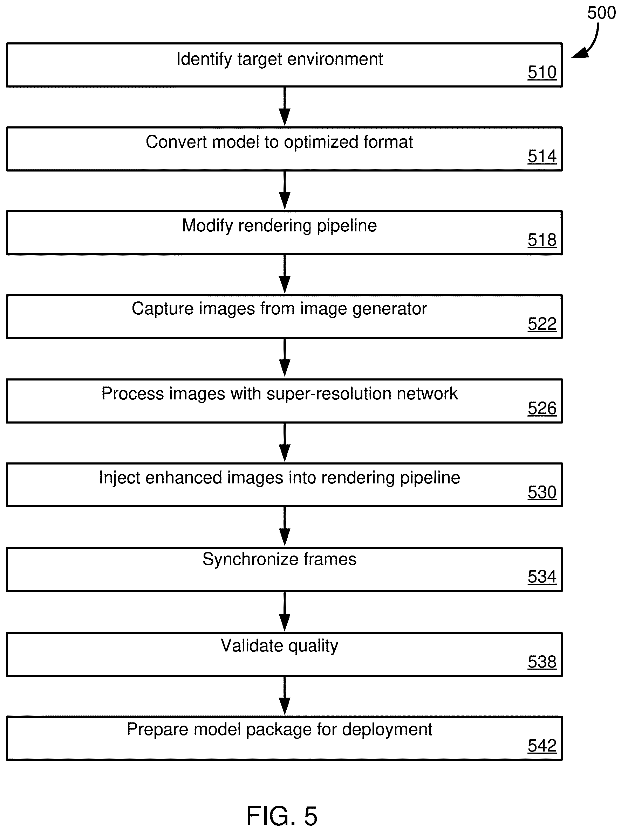

FIG. 5 illustrates an example deployment process 500 for integrating a trained super-resolution model into a device with an image generator. At 510, the target deployment environment is identified, including the hardware and software configuration of the device on which the model will be executed. Deployment targets include gaming consoles, PCs, mobile devices, and embedded systems, each of which presents distinct performance constraints. The hardware capabilities of the device are analyzed to determine whether GPU acceleration is available, what deep learning inference frameworks are supported, and how much memory and computational power is available for real-time model execution. Supported deep learning inference frameworks may include ONNX Runtime for cross-platform support, TensorRT for NVIDIA GPUs, DirectML for Windows-based DirectX 12 integration, Core ML for Apple devices, or TFLite for Android-based deployment.

At 514, the trained super-resolution model is converted into an optimized format for real-time deployment. This includes reducing computational overhead by applying quantization and pruning techniques. Quantization may involve converting model weights from FP32 (full-precision) to FP16 (half-precision) or INT8 (8-bit precision), reducing memory footprint and improving inference speed. The model is also pruned to remove unnecessary network layers while preserving accuracy. A sample TensorRT-based model optimization process is shown below:

```
       import tensorrt as trt
  
       TRT_LOGGER = trt.Logger(trt.Logger.WARNING)
       builder = trt.Builder(TRT_LOGGER)
       network = builder.create_network()
       parser = trt.OnnxParser(network, TRT_LOGGER)
  
       with open("super_res_model.onnx", "rb") as model_file:
         parser.parse(model_file.read())
  
       builder.max_workspace_size = 1 << 30
       builder.fp16_mode = True
       engine = builder.build_cuda_engine(network)
```

Once the model is converted and optimized, at 518, the rendering pipeline of the image generator is modified to insert the super-resolution model at the appropriate stage. The rendering pipeline typically consists of geometry processing, shading and lighting computations, rasterization, fragment shading, post-processing, and final image buffer output. The placement of the super-resolution model within this pipeline depends on whether it is replacing an existing upscaler, inserted as a new post-processing step, or applied before or after tone mapping, anti-aliasing, or motion blur. In some cases, the model replaces traditional bilinear or bicubic upscaling, while in other cases, it enhances image clarity without modifying the resolution.

To integrate the model, an intermediate buffer is created for the low-resolution image output from the image generator. The intermediate buffer is passed to the super-resolution model for enhancement, and the enhanced high-resolution version replaces the original low-resolution output in the rendering pipeline. The following DirectX 12-based modification demonstrates this integration:

```
       ID3D12Resource* lowResTexture;
       ID3D12Resource* highResTexture;
 
       // Bind low-res texture as input to the super-resolution model
       commandList->SetComputeRootShaderResourceView(0, lowResTexture-
       >GetGPUVirtualAddress());
 
       // Execute super-resolution inference
       commandList->Dispatch(SUPER_RES_MODEL_THREAD_GROUPS_X,
       SUPER_RES_MODEL_THREAD_GROUPS_Y, 1);
 
       // Retrieve high-res output and bind it as the final framebuffer
       commandList->SetRenderTarget(1, &highResTexture);
```

At 522, the low-resolution image frames are captured directly from the game engine's frame buffer before they are displayed. The captured frames are formatted for compatibility with the inference engine, which may include color space conversion (e.g., RGB to YUV), channel reordering (e.g., BGR to RGB if required), or batch processing preparation if multiple frames are processed in parallel.

At 526, the captured frames are processed through the super-resolution model inference engine, which applies learned patterns from training to enhance details, refine textures, and remove artifacts. The inference process is optimized for performance, utilizing multi-threaded execution, GPU async compute pipelines, and adaptive resolution scaling. Multi-threaded execution enables the model to run inference in parallel with other game engine tasks, while GPU async compute pipelines allow the model to execute in a separate GPU stream to avoid bottlenecks. Adaptive resolution scaling dynamically applies the super-resolution model only when GPU load permits, reducing performance impact.

At 530, the enhanced high-resolution frame is injected back into the rendering pipeline and synchronized with frame timing to avoid stuttering or visual lag. A sample OpenGL-based implementation for injecting the enhanced output into the final framebuffer is provided below:

```
       glBindTexture(GL_TEXTURE_2D, highResTexture);
       glTexImage2D(GL_TEXTURE_2D, 0, GL_RGBA, width, height, 0, GL_RGBA,
       GL_UNSIGNED_BYTE, superResOutputData);
```

At 534, frame synchronization techniques are applied to maintain smooth real-time rendering. These include locking frame rates to match display refresh rates, avoiding latency spikes, and providing that the enhanced frames remain visually synchronized with gameplay elements.

At 538, performance benchmarking and visual quality validation are performed to assess the effectiveness of the super-resolution model. Benchmarking involves measuring frame rendering time before and after model integration, GPU memory usage, and frame rate consistency. Visual quality assessment is conducted by comparing native high-resolution rendering with super-res-enhanced low-resolution rendering and computing perceptual similarity metrics such as Structural Similarity Index (SSIM) and Peak Signal-to-Noise Ratio (PSNR).

At 542, the final super-resolution model package is prepared for deployment. The model is bundled with the game engine or software package, including user-configurable options allowing players to enable or disable the super-resolution enhancement. A fallback mechanism is implemented to disable the model dynamically if performance degradation is detected. The final deployment may involve distributing the model as a standalone plug-in for an existing game engine, integrating it directly into an application's rendering pipeline, or embedding it into firmware updates for gaming consoles or other target devices.

Once deployed, the trained super-resolution model can be used with the same type of image generator that was used for model training or with a different type of image generator. For example, if the model was trained using high- and low-resolution image pairs generated from a first game engine, it may subsequently be applied to enhance images produced by a second game engine with different rendering characteristics. This allows for adaptability across different content pipelines while still leveraging the same super-resolution model. Differences between image generators may include variations in rendering techniques, shading models, texture filtering, and post-processing effects, which the super-resolution model can accommodate due to its training on diverse image pairs. By enabling use across different types of image generators, the trained model provides a flexible solution for improving visual quality in various applications without requiring retraining for each specific engine.

### Obtaining Correlated High- and Low- Resolution Images

The following discussion describes techniques for obtaining correlated high- and low-resolution image pairs. These techniques, which involve modifying rendering pipelines to generate paired training data, provide a source of high-quality image pairs that can be used in training a downscaler network.

U.S. Patent Publication 2024/0378694 describes a particular technique that can be used to obtain training data. In that technique, training data includes image pairings that include a low-resolution image and a corresponding high-resolution image for common frames of image data. In other words, an image pair includes a low-resolution image and a high-resolution image depicting the same scene. The technique involves an image generator that produces highly correlated pairs of high- and low-resolution images.

In some cases, such an image generator can be generated by modifying a processing pipeline, to generate a modified processing pipeline, of an image generator that was initially configured to generate image output in only a single resolution at a time to instead substantially simultaneously generate two sets of images in different resolutions, such as by introducing a second processing pipeline that accepts the same input as a first processing pipeline, but produces an output in a different resolution than the first processing pipeline. The substantially simultaneous generation of the two sets of images may occur at exactly the same periods of time or, alternatively, at different periods of time that are at least partially overlapping, such as with parallel processing by the image generator. Substantially simultaneous generation of the two sets of images may also include generating the two sets of images contemporaneously, within seconds or minutes of each other, in sequential processing, but wherein both sets of images at different resolutions are still based on the same shared content (e.g., scenes or frames).

The following provides an example of how a dual-resolution processing pipeline within a gaming engine, such as UNREAL ENGINE, can be modified at the rendering pipeline level to enable concurrent generation of high- and low-resolution images from a common input. While UNREAL ENGINE is provided as a specific example, similar modifications can be made to other gaming engines or image renderers. UNREAL ENGINE's rendering architecture, which employs a deferred rendering pipeline, provides a foundation for extending rendering passes to accommodate additional outputs.

The engine's rendering pipeline can be configured to duplicate the rendering pass for each frame while modifying the output resolution settings for one of the passes. The primary pass can retain the high-resolution settings, while a secondary pass applies scaled-down resolution settings. This duplication can be implemented by creating a custom rendering pipeline using UNREAL's Render Graph, which supports the definition of complex rendering workflows and allows fine-grained control over rendering passes.

To have both pipelines share the same scene input, the rendering system can reuse the same scene graph and object states for both the high-resolution and low-resolution outputs. UNREAL ENGINE's scene management and frame buffer architecture naturally support this shared data approach, allowing for consistent scene elements, materials, lighting, and effects across both resolutions. This helps the goal of having images that depict identical scenes and minimizes discrepancies caused by frame-to-frame variations.

Adjustments may be made to handle non-deterministic factors inherent in rendering workflows, such as random number generation and physics simulations. UNREAL ENGINE allows control over such factors by locking random seeds or synchronizing physics simulations for each frame, again providing that the two outputs differ only in resolution while maintaining other visual characteristics.

To optimize performance, the dual-resolution rendering process can leverage parallelism by employing separate GPU compute passes or multi-threading capabilities. Modern GPUs and UNREAL ENGINE's rendering system allow for multiple render targets (MRTs), where a single rendering pass can output to multiple frame buffers at different resolutions. This approach minimizes redundant computation and reduces the performance overhead of generating two outputs.

In cases where the target device does not support simultaneous dual-resolution rendering through multi-render target (MRT) capabilities, the system may switch to sequential rendering. This involves rendering the high-resolution frame first, caching scene parameters, and then re-rendering the same frame at a lower resolution. While sequential rendering introduces a minor computational overhead, it ensures compatibility with GPUs that lack native MRT support.

The generated high- and low-resolution images can be further processed and paired for training purposes. UNREAL ENGINE's post-processing pipeline can be extended to export the images directly to a specified file format, maintaining metadata about the frame and providing correct correspondence between paired images.

The two sets of images can then be paired together into training data. In particular, a low-resolution image and a corresponding high-resolution image for a plurality of different frames of image data are paired together as training data for training a super-resolution model. The paired images can include all image data that is generated (e.g., low-resolution and high-resolution images for each of the plurality of different frames) or, alternatively, for only a subset of the image data that is generated (e.g., low-resolution and high-resolution images for only some of the plurality of the different frames generated). Additionally, the paired image data can include the entirety of the paired low-resolution and high-resolution images or, alternatively, only limited corresponding sub-portions of the paired low-resolution and high-resolution images.

The super-resolution model is trained by applying the super-resolution model to the training data. With this training, the super-resolution model is tuned to generate high-resolution images with resolutions that are the same as or similar to the high-resolution images in the image pairings, having the same quality or resolution attribute, based on new input low-resolution images with resolutions that are the same as or similar to the low-resolution images in the image pairings.

References to the images having the same or similar resolutions mean that the resolutions have the same or similar sharpness, clarity, and/or pixel density. If the resolutions are the same, for example, then they are identical (i.e., they have identical sharpness, clarity, and/or pixel density). If the resolutions are similar, then then the sharpness, clarity, and/or pixel density of one resolution is within 99%, 98%, 97%, 96%, 95%, between 95%-90%, between 85%-80% of the corresponding sharpness, clarity and/or pixel density of the comparable resolution" to "then the sharpness, clarity, and/or pixel density of one resolution is within 99%, 98%, 97%, 96%, 95%, between 95%-90%, or between 85%-80% of the corresponding sharpness, clarity, and/or pixel density of the comparable resolution.

While the approach of the prior technique allows for the generation of training data, it presumes the ability to modify an image processing pipeline, such as an image processing pipeline of a gaming engine. Examples of gaming engines include UNREAL ENGINE, AMAZON LUMBERYARD, CRYENGINE, UNITY, GAMEMAKER: STUDIO, and INCREDIBUILD. To generate the images the gaming engine may have a complex 3D mesh model or other model of a scene and objects in the scene. The gaming engine may render output images from the complex 3D mesh model.

Often, while other parties may use a particular gaming engine, they may not have the ability to modify the code of the gaming engine to concurrently produce both high- and low-resolution images. Even when this ability is provided, a rendering package may be used to provide consistent, reproducible scenes across different resolutions, minimizing differences caused by rendering artifacts, procedural randomness, or real-time physics calculations. For example, rendering based on "live" input to a game engine can result in image differences from things like different values being generated by a random generator or from different output from a physics simulator, such as one for determining particle effects like pixels in an image of a fire.

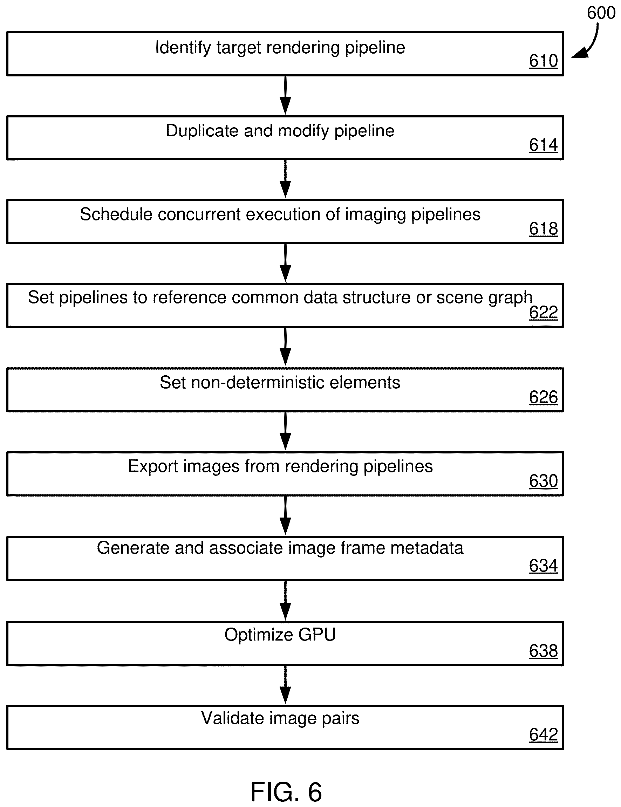

The following discussion describes techniques for obtaining correlated high- and low-resolution image pairs according to a particular implementation of disclosed techniques. The implementation involves modifying rendering pipelines to generate paired training data, providing a source of high-quality image pairs that can be used in training a downscaler network. FIG. 6 illustrates an example training process 600 for obtaining correlated high- and low-resolution image pairs from an image generator, such as a game engine.

Initially, at 610, an existing rendering pipeline within the image generator is identified and analyzed. Typically, such pipelines, for example in UNREAL ENGINE, handle geometry processing, including vertex shading and rasterization, followed by pixel shading, where lighting and texture details are applied, and finally, post-processing effects such as anti-aliasing, bloom, or motion blur.

At 614, the existing pipeline is duplicated and modified using pipeline editing tools, such as UNREAL ENGINE's Render Graph visual scripting interface. The original pipeline, designated as the primary pipeline, is configured to output images at a high resolution, for example, 3840x2160 pixels. A secondary pipeline is created and configured for a lower resolution, such as 1920x1080 pixels. Pipeline duplication involves adding parallel render paths within the rendering graph structure, providing two distinct processing sequences. The duplication includes configuring nodes or passes in the render graph to provide two complete and separate rendering streams.

Alternatively, pipeline duplication can also be achieved by leveraging Unreal Engine's nDisplay feature, which natively supports the creation of multiple display viewports with independent resolution settings. nDisplay allows for the configuration of separate viewports, each rendered at different resolutions, while keeping scene parameters-such as geometry, materials, lighting, and camera transforms-remain locked and consistent across viewports. This locking mechanism eliminates the need for additional synchronization steps, as nDisplay inherently maintains consistent scene state parameters across multiple viewports. In one implementation, custom Unreal Engine modifications are applied to capture the render targets associated with each nDisplay viewport, enabling the capture of correlated high- and low-resolution frames. These modifications facilitate the extraction of frame pairs from the separate viewports, so that corresponding images from different resolutions are accurately paired for training data generation.

At 618, to maintain synchronization between pipelines, execution is scheduled to occur simultaneously or nearly simultaneously using multithreaded execution capabilities or GPU parallel rendering features available within graphics, APIs such as DirectX, Vulkan, or engine-specific command queues. Each pipeline is assigned to distinct GPU streams or command buffers, with the primary rendering pass, for example, assigned to GPU stream 1 and the secondary rendering pass to GPU stream 2.

To maintain frame alignment across the dual-resolution pipelines, the system applies synchronization mechanisms, so that both high- and low-resolution outputs correspond to the same rendering timestep. This may involve frame pacing techniques, where the engine waits until both resolutions are rendered before proceeding to the next frame. If a frame mismatch occurs-such as when the lower-resolution pipeline completes a frame faster-the system can introduce a buffer to delay the faster pipeline until both are synchronized. In cases where the high-resolution rendering pipeline is delayed due to computational load, a temporary placeholder frame may be used to avoid frame drops.

At 622, to provide consistent outputs, both pipelines reference a single, common scene data structure or scene graph that includes identical geometry, textures, shaders, materials, and lighting parameters. Scene states and configurations are managed, recording object transformations such as positions, rotations, and scales, as well as camera parameters like position vectors, orientation quaternions, and field of view parameters. These configurations are stored in persistent storage formats such as XML or JSON configuration files.

At 626, non-deterministic elements in the rendering pipeline, such as random number generation and physics simulations, are controlled for reproducibility. Random number generators are configured with fixed seeds using commands such as:

```
       random_seed = 123456789
       SetRandomSeed(random_seed=random_seed)
```

Physics simulations are set to fixed time-step modes, for example, at exactly 16 milliseconds per frame. Initial physics states, including object positions, velocities, and forces, are recorded into physics configuration files and consistently reused across both pipelines.

At step 630, following the rendering process, images at both resolutions are exported using structured file paths. For example, output images may be saved to paths such as /dataset/high/frame _001_high.png for high-resolution images and /dataset/low/frame_001_low.png for corresponding low-resolution images. Correlated image pairs are linked by consistent naming conventions to facilitate retrieval.

At step 634, metadata detailing each frame's rendering parameters is generated and associated with each pair of images. An example metadata structure recorded as a JSON file is provided below:

```
       {
          "frame_number": 1,
          "timestamp": "2025-03-10T12:00:00Z",
          "resolution_high": [3840, 2160],
          "resolution_low": [1920, 1080],
          "random_seed": 123456789,
          "camera_position": [0.0, 1.0, 5.0],
          "camera_orientation": [0.0, 0.0, 0.0, 1.0],
          "lighting_parameters": {
            "global_illumination": true,
            "shadow_quality": "high"
          },
          "physics_settings": {
            "timestep_ms": 16,
            "initial_physics_state_hash": "alb2c3d4"
          }
        }
```

At 638, GPU performance optimization techniques are implemented using multi-render target (MRT) capabilities. GPU shader code directs pixel data simultaneously to multiple render targets at different resolutions. A shader pseudo-code example demonstrating simultaneous output is as follows:

```
       PixelShaderOutput main(PixelShaderInput input) {
          float4 pixelColor = ComputeColor(input);
          OutputTarget0[pixelPos.xy] = pixelColor; // High-res buffer
          OutputTarget1[pixelPos.xy / 2] = pixelColor; // Low-res buffer
          return pixelColor;
       }
```

At step 642, image pairs are validated through automated scripts, such as Python scripts, that match filenames and verify image quality. For example, a validation script confirming pixel alignment might include:

```
       if not images _aligned(high_res_img, low_res_img):
          raise Exception("Image pair mismatch detected at frame
       {}".format(frame_number))
```

If an image pair fails validation due to a mismatch in alignment, excessive structural differences, or outlier characteristics, the pair is either logged for manual review or automatically discarded from the training dataset. In some implementations, image pairs failing validation may be reprocessed through an alternative downscaler configuration to attempt correction before final rejection. The validation process provides that only well-correlated image pairs are used, reducing the risk of training artifacts that could degrade model performance.

The validated image pairs, along with their metadata, are then organized into a structured training dataset directory, such as:

```
       /training_dataset/
          high_res/frame_001_high.png
          low_res/frame_001_low.png
          metadata/frame_001.json
```

This structured and validated dataset is then suitable for subsequent training of downscaler networks and super-resolution models.

### Example Super-Resolution Models

The super-resolution models described in this section process the training data discussed earlier in Example 2. Super-resolution models, such as SRCNN and ESRGAN, are relatively new developments. These models differ from traditional upscalers by reconstructing fine details that are not present in the low-resolution input, thereby producing high-quality outputs with enhanced perceptual and structural fidelity. This capability is typically achieved through sophisticated architectures that use convolutional neural networks (CNNs) or generative adversarial networks (GANs) to predict and synthesize high-frequency image features that are typically lost during downscaling or are not present in natively generated lower-resolution content. A non-exhaustive list of examples of super-resolution models that may be used in the present technology includes convolutional neural network (CNN)-based models such as SRCNN (Super-Resolution Convolutional Neural Network), VDSR (Very Deep Super-Resolution), and FSRCNN (Fast Super-Resolution Convolutional Neural Network); generative adversarial network (GAN)-based models like SRGAN (Super-Resolution Generative Adversarial Network) and ESRGAN (Enhanced Super-Resolution Generative Adversarial Network); transformer-based models such as SwinIR (Swin Transformer for Image Restoration); attention mechanism models like SAN (Second-order Attention Network); iterative optimization models like DRLN (Deep Recursive Residual Network for Super-Resolution); and hybrid models that combine multiple architectures, including LapSRN (Laplace Pyramid Super-Resolution Network) and EDSR (Enhanced Deep Super-Resolution).

The Super-Resolution Convolutional Neural Network (SRCNN) uses a three-layer architecture. The first layer performs patch extraction and representation, which involves applying a series of convolutional filters to the low-resolution input to extract overlapping patches and encode them into feature maps. In the context of SRCNN, a patch refers to a small, localized region or subsection of an image extracted and processed during the initial stage of the network. These patches are used to capture fine-grained details and features from the input image, which are then encoded into feature maps for further processing and reconstruction into a high-resolution output.

The second layer maps these feature maps to a high-dimensional space using a mapping function, where the relationship between low-resolution and high-resolution patches can be modeled. This mapping function is typically nonlinear, which allows the model to learn complex correspondences between input and output. The third layer reconstructs the high-resolution image by combining the mapped features into the output space.

The Enhanced Super-Resolution Generative Adversarial Network (ESRGAN) includes a generator responsible for producing high-resolution outputs and a discriminator tasked with distinguishing between real and generated high-resolution images. The generator in ESRGAN employs a deep residual network with skip connections (shortcuts that allow information to bypass certain layers, preventing the degradation of important features during training), which helps preserve low-frequency information while focusing the deeper layers on synthesizing high-frequency details. ESRGAN also introduces perceptual loss, calculated using features from a pre-trained neural network such as VGG (Visual Geometry Group, a convolutional neural network used as a feature extractor), to measure high-level content differences between the generated and ground truth images. This perceptual loss encourages the generator to produce outputs that are not only pixel-accurate but also visually realistic. In addition, ESRGAN incorporates a relativistic discriminator, which evaluates whether the real images are more realistic than the generated ones, thereby improving the overall stability and quality of training.

The Fast Super-Resolution Convolutional Neural Network (FSRCNN) operates directly on low-resolution images, bypassing the intermediate bicubic upscaling step typically used in other super-resolution methods. FSRCNN achieves this by introducing a shrinking layer that reduces the dimensionality of feature maps, thereby decreasing computational complexity. A series of mapping layers then process these compact feature maps, learning the relationships necessary for high-resolution reconstruction. A deconvolution layer then upsamples the processed features to the target resolution. FSRCNN operates efficiently and is particularly useful for real-time applications.

In the Efficient Sub-Pixel Convolutional Neural Network (ESPCN), instead of performing traditional upsampling at the end of the network, ESPCN rearranges feature maps into the high-resolution output space using a sub-pixel convolution layer. This approach avoids interpolation artifacts and reduces computational overhead by keeping operations in the low-resolution domain until the final step. ESPCN is useful in applications with high resource constraints, such as game engines that require real-time rendering.

The Laplacian Pyramid Super-Resolution Network (LapSRN) uses a hierarchical framework related to Laplacian pyramids, a technique often used for multi-scale image processing. LapSRN generates high-resolution images in a coarse-to-fine manner, predicting residuals at each level of the pyramid. These residuals represent the difference between an upscaled intermediate result and the ground truth at that scale, progressively refining details at multiple levels to reconstruct high-frequency components.

In the context of game engines, super-resolution models can enhance visual fidelity by dynamically generating high-resolution textures, environmental details, or character assets. For example, a game engine might render textures at 1080p to optimize performance and pass these low-resolution textures through a super-resolution model to produce visually enriched outputs at 4K resolution. Similarly, scenes rendered at 720p for performance reasons can be upscaled to 1440p or 4K in real-time using super-resolution models, achieving a balance between computational efficiency and visual quality. Super-resolution models can also be useful in improving image quality for engines that were designed for lower-resolution output. For example, the output of a game engine originally designed to produce a lower resolution output can be processed to provide images that appear to be natively rendered at higher resolution and detail, better meeting expectations of users who are accustomed to high quality images. As explained above, super-resolution models can add detail to lower-quality images, rather than simply upscaling them.

### Downscaler Networks

Downscaling refers to the process of reducing the resolution of an image or frame, often for applications such as storage, transmission, rendering, or visualization. Traditional downscalers prioritize preserving important visual information and structural integrity, minimizing quality loss to maintain usability for these purposes. In certain applications, such as preparing data for machine learning tasks or evaluating image restoration techniques, downscalers may instead focus on replicating real-world degradations, such as noise, compression artifacts, and blur. Unlike traditional methods such as bicubic or bilinear interpolation, learned downscalers, referred to herein as downscaler networks, can simulate these complex, non-linear degradations. That is, the goal is to downscale an image to have similar qualities as native lower quality images, not to optimize the quality of a downscaled image. A non-exhaustive list of examples of downscaler techniques that may be used in the present technology includes convolutional neural network (CNN)-based models such as DRCN (Deep Recursive Convolutional Network) and VDSR (Very Deep Super-Resolution, adapted for downscaling); generative adversarial network (GAN)-based models like DGAN (Downscaling Generative Adversarial Network); attention mechanism models such as DAN (Downscaling Attention Network); iterative optimization models like DRLN (Deep Recursive Residual Network for Downscaling); and hybrid models that combine multiple architectures, including LapSRN (Laplace Pyramid Super-Resolution Network, adapted for downscaling) and EDSR (Enhanced Deep Super-Resolution, adapted for downscaling).

High-resolution images serve as input to a downscaler network, which processes them to generate corresponding low-resolution outputs. A training dataset may include a variety of scaling factors, such as integer, fractional, and non-integer scales, to help the model generalize effectively to different resolutions. Augmentation techniques like rotations, flips, and brightness adjustments are commonly applied to increase robustness and prevent overfitting.

For "realistic" downscalers, architectures often include convolutional layers that extract features from the high-resolution input, such as edges, textures, and gradients. In this context, a "realistic" downscaler refers to a model that produces low-resolution outputs that mimic the characteristics of naturally low-resolution images, rather than simply applying uniform downsampling. This includes preserving expected artifacts such as blurring, noise, compression effects, or texture degradation that occur in real-world low-resolution images. These layers encode the spatial information for generating a high-quality low-resolution representation. Downscaling is achieved through operations like strided convolutions or pooling layers. Strided convolutions apply filters while reducing spatial resolution by skipping pixels, allowing the model to learn task-specific transformations, such as applying a learned blur or selectively preserving certain features. Pooling layers, such as max-pooling or average-pooling, simplify the input by aggregating pixel values.

To enhance the realism of low-resolution outputs, additional degradation modules may be included in the architecture. Gaussian blur layers can be added to simulate optical effects, while noise injection layers introduce stochastic variations such as additive Gaussian noise or salt-and-pepper noise to mimic sensor imperfections. These modules are often parameterized, allowing the model to learn context-specific degradations. For example, the model can apply stronger noise in low-light regions of an image or introduce varying degrees of compression artifacts depending on the content's texture and complexity.

Downscaler networks can use adversarial training frameworks to help with the goal of providing outputs that are visually indistinguishable from real-world low-resolution images. The downscaler network acts as the generator in a generative adversarial network (GAN), producing low-resolution images, while a discriminator evaluates their authenticity. The adversarial loss penalizes the generator when its outputs deviate from realistic low-resolution characteristics, encouraging the model to replicate the types of degradations found in practical applications.

Loss functions for downscaler networks are configured based on desired quality and realism criteria. Pixel-wise losses, such as mean squared error (MSE) or mean absolute error (MAE), measure the similarity between the generated low-resolution output and a ground-truth low-resolution image, providing a measure of structural accuracy. Perceptual loss, which evaluates high-level feature similarity using a pre-trained network like VGG, can be used to preserve perceptual consistency in outputs. Information preservation loss is another consideration, such as where the low-resolution image should retain sufficient information for downstream applications, such as analysis or visualization.

Training a downscaler network typically involves iterative optimization using paired datasets. The network processes high-resolution inputs to generate low-resolution outputs, computes the loss based on the differences between the generated and ground-truth low-resolution images, and updates its parameters using gradient descent techniques like Adam or stochastic gradient descent. To provide generalization, periodic validation on unseen data is often performed using metrics such as structural similarity index (SSIM) or peak signal-to-noise ratio (PSNR). These metrics quantitatively evaluate the model's ability to produce low-resolution images that are both realistic and structurally consistent with the input.

### Example Operations

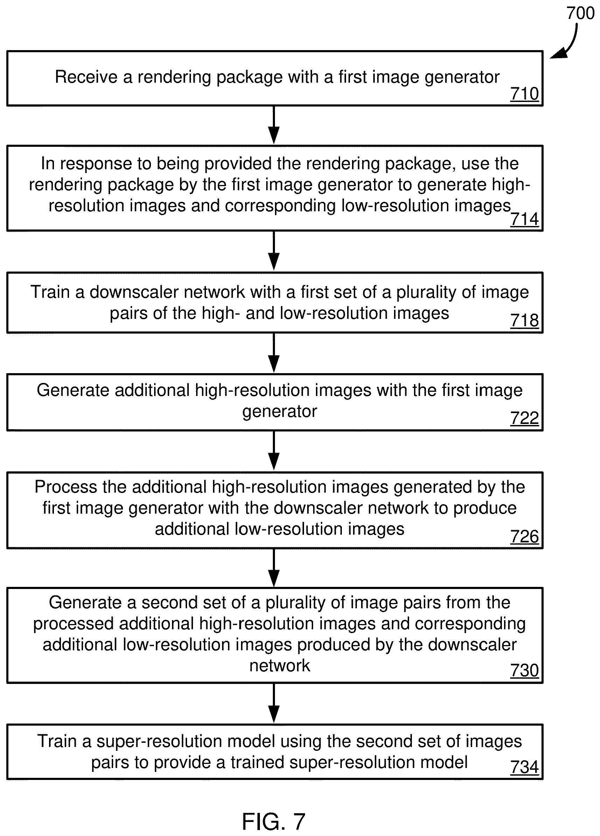

FIG. 7 illustrates a process 700 for generating training data and training a super-resolution model using high- and low-resolution image pairs obtained from an image generator and a downscaler network. At 710, a rendering package is received by a first image generator, which is configured to process the package. Using the rendering package, the first image generator produces high-resolution images along with corresponding low-resolution images at 714.

A downscaler network is trained at 718, where a first set of image pairs, each comprising a high-resolution image and a corresponding low-resolution image, is used for training. At 722, additional high-resolution images are generated by the first image generator. These additional high-resolution images are then processed by the downscaler network at 726 to generate additional low-resolution images.

At 730, a second set of image pairs is formed, where each image pair includes one of the additional high-resolution images and its corresponding additional low-resolution image produced by the downscaler network. Training of the super-resolution model occurs at 734, where the second set of image pairs is used to refine and optimize the model.

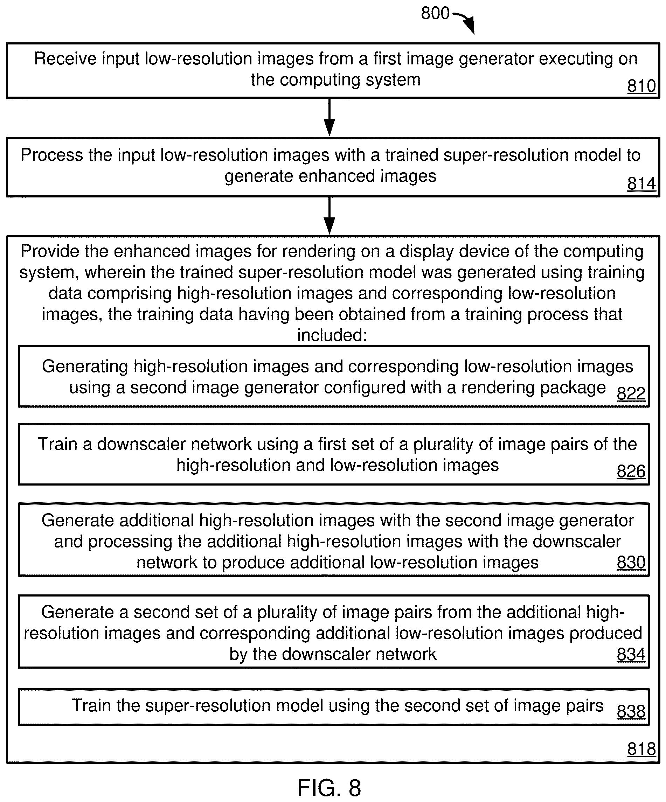

FIG. 8 illustrates a process 800 for using a trained super-resolution model that has been generated using high- and low-resolution image pairs obtained from a downscaler network and an image generator. At 810, input low-resolution images are received from a first image generator executing on a computing system. The input low-resolution images are processed at 814, where a trained super-resolution model is applied to generate enhanced images. At 818, the enhanced images are provided for rendering on a display device of the computing system.

The trained super-resolution model was generated using training data that included high-resolution images and corresponding low-resolution images, which were obtained through a structured training process. At 822, a second image generator, configured with a rendering package, generates high-resolution images along with corresponding low-resolution images. A downscaler network is trained at 826, where a first set of image pairs-each including a high-resolution image and a corresponding low-resolution image-is used for training. At 830, additional high-resolution images are generated by the second image generator, and are processed with the downscaler network to produce additional low-resolution images.

At 834, a second set of image pairs is generated, each including one of the additional high-resolution images and its corresponding additional low-resolution image produced by the downscaler network. Training of the super-resolution model occurs at 838, where the second set of image pairs is used to refine and optimize the model for deployment.

### Additional Examples

Example 1 is a computing system that includes at least one memory, at least one hardware processor coupled to the at least one memory, and one or more computer-readable storage media storing computer-executable instructions. The instructions, when executed, cause the computing system to perform operations. The operations include receiving a rendering package with a first image generator. In response to being provided the rendering package, the rendering package is used by the first image generator to generate high-resolution images and corresponding low-resolution images.

A downscaler network is trained with a first set of a plurality of image pairs of the high-resolution and low-resolution images. Additional high-resolution images are generated with the first image generator. The additional high-resolution images generated by the first image generator are processed with the downscaler network to produce additional low-resolution images. A second set of a plurality of image pairs is generated from the processed additional high-resolution images and corresponding additional low-resolution images produced by the downscaler network. A super-resolution model is trained using the second set of image pairs to provide a trained super-resolution model.

Example 2 is the computing system of Example 1, where the first image generator includes a processing pipeline to generate both high-resolution and low-resolution images from a single processing event for the rendering package.

Example 3 is the computing system of Example 1 or Example 2, where the operations further include deploying the trained super-resolution model to a second computing device different from a first computing device on which the downscaler network was trained. The second computing device provides additional low-resolution images from a second image generator of the second computing device. The additional low-resolution images from the second image generator are processed with the trained super-resolution model to produce additional high-resolution images. The additional high-resolution images produced by the trained super-resolution model are rendered for display on a display device of the second computing device.

Example 4 is the computing system of Example 3, where the downscaler network is not deployed to the second computing device.

Example 5 is the computing system of Example 3 or Example 4, where the first image generator and the second image generator are of different types.

Example 6 is the computing system of Example 5, where the first image generator and the second image generator are of the same type.

Example 7 is the computing system of any of Examples 3-6, where the second image generator does not include the modified processing pipeline.

Example 8 is the computing system of any of Examples 1-7, where the first image generator is a game engine rendering images for a specific game title and training data for the super-resolution network includes image pairs from the game title.

Example 9 is the computing system of any of Examples 1-8, where the super-resolution network is configured to produce a resolution that is less than or equal to a maximum resolution supported by a device onto which the super-resolution model will be deployed.

Example 10 is the computing system of any of Examples 1-9, where the trained super-resolution model is configured to enhance image details at an input resolution by refining textures, reducing artifacts, and improving visual clarity without modifying the resolution of the input images.

Example 11 is the computing system of claim 10, where the trained super-resolution model is configured to enhance images by applying convolutional processing that extracts fine textures, suppresses aliasing, and reduces compression artifacts, using loss functions that include at least one of perceptual loss, adversarial loss, or total variation loss.

Example 12 is a method implemented in a computing environment that includes at least one hardware processor and at least one memory coupled to the hardware processor. The method includes receiving high-resolution images generated by a first image generator. The high-resolution images are processed with a downscaler network to generate corresponding low-resolution images. A first set of a plurality of image pairs is generated, where each image pair includes a high-resolution image from the first image generator and a corresponding low-resolution image produced by the downscaler network. The first set of image pairs is used to train a super-resolution model.

Example 13 is the method of Example 12, where the method further includes training the downscaler network using a second set of a plurality of image pairs. The second set of image pairs is generated by a second image generator configured with a processing pipeline that processes a rendering package to produce both high-resolution and low-resolution images from a single processing event for the rendering package.

Example 14 is the method of Example 13, where the first image generator and the second image generator are of different types.

Example 15 is the method of any of Examples 12-14, where applying the trained super-resolution model includes enhancing image details at an input resolution by refining textures, reducing artifacts, and improving visual clarity without modifying the resolution of the input images.

Example 16 is one or more computer-readable storage media that include computer-executable instructions. When executed by a computing system that includes at least one hardware processor and at least one memory coupled to the hardware processor, the instructions cause the computing system to receive input low-resolution images from a first image generator executing on the computing system. The instructions cause the computing system to process the input low-resolution images with a trained super-resolution model to generate enhanced images. The instructions further cause the computing system to provide the enhanced images for rendering on a display device of the computing system.

The trained super-resolution model was generated using training data that includes high-resolution images and corresponding low-resolution images. The training data was obtained from a training process that included generating high-resolution images and corresponding low-resolution images using a second image generator configured with a rendering package. The training process further included training a downscaler network using a first set of a plurality of image pairs of the high-resolution and low-resolution images. Additional high-resolution images were generated with the second image generator and processed with the downscaler network to produce additional low-resolution images. A second set of a plurality of image pairs was generated from the additional high-resolution images and corresponding additional low-resolution images produced by the downscaler network. The second set of image pairs was used to train the super-resolution model.

Example 17 is the one or more computer-readable storage media of Example 16, where the trained super-resolution model is configured to enhance image details at an input resolution by refining textures, reducing artifacts, and improving visual clarity without modifying the resolution of the input images.

Example 18 is the one or more computer-readable storage media of Example 16 or Example 17, where the first image generator and the second image generator are of different types.

Example 19 is the one or more computer-readable storage media of any of Examples 16-18, where the second image generator includes a processing pipeline configured to generate both high-resolution and corresponding low-resolution images from a single processing event for a rendering package, such that the high-resolution and low-resolution images used for training the super-resolution model are correlated by being derived from a common input scene.

Example 20 is the one or more computer-readable storage media of any of Examples 16-19, where the second image generator does not include the modified processing pipeline.

### Computing Systems

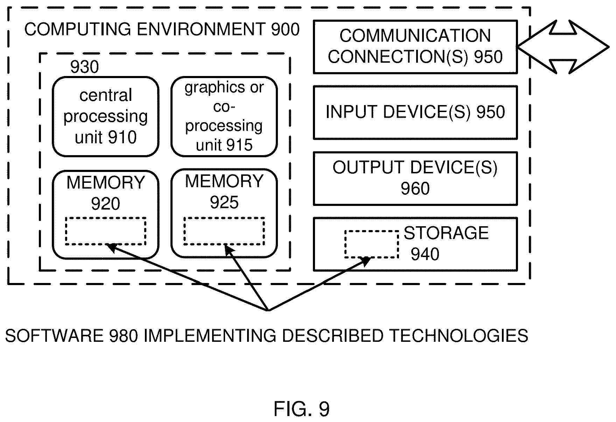

FIG. 9 depicts a generalized example of a suitable computing system 00 in which the described innovations may be implemented. The computing system 900 is not intended to suggest any limitation as to scope of use or functionality of the present disclosure, as the innovations may be implemented in diverse general-purpose or special-purpose computing systems.

With reference to FIG. 9, the computing system 900 includes one or more processing units 910, 915 and memory 920, 925. In FIG. 9, this basic configuration 930 is included within a dashed line. The processing units 910, 915 execute computer-executable instructions, such as for implementing the features described in the present disclosure. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 9 shows a central processing unit 910 as well as a graphics processing unit or co-processing unit 915. The tangible memory 920, 925 may be volatile memory (e.g., registers, cache, RAM), non-volatile memory (e.g., ROM, EEPROM, flash memory, etc.), or some combination of the two, accessible by the processing unit(s) 910, 915. The memory 920, 925 stores software 980 implementing one or more innovations described herein, in the form of computer-executable instructions suitable for execution by the processing unit(s) 910, 915.

A computing system 900 may have additional features. For example, the computing system 900 includes storage 940, one or more input devices 950, one or more output devices 960, and one or more communication connections 950, including input devices, output devices, and communication connections for interacting with a user. An interconnection mechanism (not shown) such as a bus, controller, or network interconnects the components of the computing system 900. Typically, operating system software (not shown) provides an operating environment for other software executing in the computing system 900, and coordinates activities of the components of the computing system 900.

The tangible storage 940 may be removable or non-removable, and includes magnetic disks, magnetic tapes or cassettes, CD-ROMs, DVDs, or any other medium which can be used to store information in a non-transitory way, and which can be accessed within the computing system 900. The storage 940 stores instructions for the software 980 implementing one or more innovations described herein.

The input device(s) 950 may be a touch input device such as a keyboard, mouse, pen, or trackball, a voice input device, a scanning device, or another device that provides input to the computing system 900. The output device(s) 960 may be a display, printer, speaker, CD-writer, or another device that provides output from the computing system 900.

The communication connection(s) 950 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Cloud Computing Environment

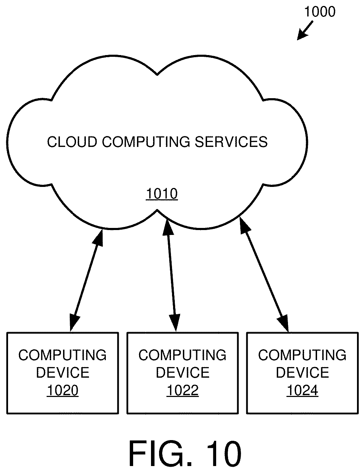

FIG. 10 depicts an example cloud computing environment 1000 in which the described technologies can be implemented. The cloud computing environment 1000 comprises cloud computing services 1010. The cloud computing services 1010 can comprise various types of cloud computing resources, such as computer servers, data storage repositories, networking resources, etc. The cloud computing services 1010 can be centrally located (e.g., provided by a data center of a business or organization) or distributed (e.g., provided by various computing resources located at different locations, such as different data centers and/or located in different cities or countries).

The cloud computing services 1010 are utilized by various types of computing devices (e.g., client computing devices), such as computing devices 1020, 1022, and 1024. For example, the computing devices (e.g., 1020, 1022, and 1024) can be computers (e.g., desktop or laptop computers), mobile devices (e.g., tablet computers or smart phones), or other types of computing devices. For example, the computing devices (e.g., 1020, 1022, and 1024) can utilize the cloud computing services 1010 to perform computing operations (e.g., data processing, data storage, and the like).

### Implementations

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example and with reference to FIG. 9, computer-readable storage media include memory 920 and 925, and storage 940. The term computer-readable storage media does not include signals and carrier waves. In addition, the term computer-readable storage media does not include communication connections (e.g., 950).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network, or other such network) using one or more network computers.

For clarity, only certain selected aspects of the software-based implementations are described. It should be understood that the disclosed technology is not limited to any specific computer language or program. For instance, the disclosed technology can be implemented by software written in C++, Java, Perl, JavaScript, Python, Ruby, ABAP, SQL, Adobe Flash, or any other suitable programming language, or, in some examples, markup languages such as html or XML, or combinations of suitable programming languages and markup languages. Likewise, the disclosed technology is not limited to any particular computer or type of hardware.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

In an example, there is provided a computing system comprising: at least one memory; at least one hardware processor coupled to the at least one memory; and one or more computer-readable storage media storing computer-executable instructions, that, when executed, cause the computing system to perform operations comprising: receiving a rendering package with a first image generator; in response to being provided the rendering package, using the rendering package by the first image generator to generate high-resolution images and corresponding low-resolution images; training a downscaler network with a first set of a plurality of image pairs of the high- and low-resolution images; generating additional high-resolution images with the first image generator; processing the additional high-resolution images generated by the first image generator with the downscaler network to produce additional low-resolution images; generating a second set of a plurality of image pairs from the processed additional high-resolution images and corresponding additional low-resolution images produced by the downscaler network; and training a super-resolution model using the second set of images pairs to provide a trained super-resolution model.

In an example, the first image generator includes a processing pipeline to generate both high-resolution and low-resolution images from a single processing event for the rendering package.

In an example, the operations further comprise: deploying the trained super-resolution model to a second computing device different from a first computing device on which the downscaler network was trained, the second computing device providing additional low-resolution images from a second image generator of the second computing device, processing the additional low-resolution images from the second image generator with the trained super-resolution model to produce additional high-resolution images, and causing the additional high-resolution images produced by the trained super-resolution model to be rendered for display on a display device of the second computing device.

In an example, the operations further comprise: not deploying the downscaler network to the second computing device.

In an example, the first set of image pairs is generated by applying a learned downscaling model to high-resolution images, the downscaling model having been trained using correlated high-resolution and low-resolution image pairs generated from a rendering engine configured to produce dual-resolution outputs from a single processing event.

In an example, the correlated image pairs used to train the downscaling model are generated from a rendering engine operating in a frozen simulation state by holding a simulation time value constant during rendering.

In an example, the second image generator does not comprise the modified processing pipeline.

In an example, the first image generator is a game engine rendering images for a specific game title and training data for the super-resolution network comprises image pairs from a game title.

In an example, the trained super-resolution model is configured to enhance image details at an input resolution by refining textures, reducing artifacts, and improving visual clarity without modifying the resolution of the input images.

In an example, the super-resolution model comprises a convolutional neural network implemented without any upsampling or resizing layers, the network comprising a plurality of residual blocks that each include convolutional layers with fixed kernel sizes and skip connections, the network being configured to operate entirely at the native resolution of the input image by propagating spatially-aligned features from layer to layer, refining fine-grained detail and suppressing artifacts while preserving the original image layout throughout the inference path.

In an example, the super-resolution model is trained using image pairs having identical spatial resolution, the low-quality images being generated by applying a separately trained downscaling model to high-resolution renderings, and the training process being configured by constraining the model to operate at fixed input resolution and by applying one or more loss functions comprising at least one of: (i) a perceptual loss computed using intermediate feature activations of a pre-trained classification network to promote visual similarity to the high-resolution target, and (ii) a total variation loss computed from spatial gradients of the output image to suppress high-frequency noise and enhance smoothness, thereby training the model to perform resolution-preserving image enhancement without learning to increase spatial dimensions.

In an example, there is provided a method, implemented in a computing environment comprising at least one hardware processor and at least one memory coupled to the at least one hardware processor, the method comprising: receiving high-resolution images generated by a first image generator; processing the high-resolution images with a downscaler network to generate corresponding low-resolution images; generating a first set of a plurality of image pairs, each image pair comprising a high-resolution image from the first image generator and a corresponding low-resolution image produced by the downscaler network; and training a super-resolution model using the first set of image pairs.

In an example, the method further comprises: training the downscaler network using a second set of a plurality of image pairs, wherein the second set of image pairs is generated by a second image generator configured with a processing pipeline that processes a rendering package to produce both high-resolution and low-resolution images from a single processing event for the rendering package.

In an example, the first set of image pairs is generated by applying the trained downscaler network to high-resolution images to produce low-quality images of identical spatial resolution, the image pairs being used to train the super-resolution model to enhance image fidelity without altering spatial dimensions.

In an example, the super-resolution model comprises a convolutional neural network constrained to operate at input resolution using residual connections and spatially-aligned convolutional layers, and wherein training is performed using at least one loss function selected to penalize perceptual differences or visual noise without encouraging spatial enlargement.

In an example, there is provided one or more computer-readable storage media comprising: computer-executable instructions that, when executed by a computing system comprising at least one hardware processor and at least one memory coupled to the at least one hardware processor, cause the computing system to receive input low-resolution images from a first image generator executing on the computing system; computer-executable instructions that, when executed by the computing system, cause the computing system to process the input low-resolution images with a trained super-resolution model to generate enhanced images; computer-executable instructions that, when executed by the computing system, cause the computing system to provide the enhanced images for rendering on a display device of the computing system; and wherein the trained super-resolution model was generated using training data comprising high-resolution images and corresponding low-resolution images, the training data having been obtained from a training process that included: generating high-resolution images and corresponding low-resolution images using a second image generator configured with a rendering package; training a downscaler network using a first set of a plurality of image pairs of the high-resolution and low-resolution images; generating additional high-resolution images with the second image generator and processing the additional high-resolution images with the downscaler network to produce additional low-resolution images; generating a second set of a plurality of image pairs from the additional high-resolution images and corresponding additional low-resolution images produced by the downscaler network; and training the super-resolution model using the second set of image pairs.

In an example, the trained super-resolution model comprises a convolutional neural network configured to maintain the spatial resolution of the input image throughout inference, and is implemented without upsampling layers or other components that increase the spatial dimensions of intermediate feature maps.

In an example, the trained super-resolution model is configured to enhance image details at an input resolution by refining textures, reducing artifacts, and improving visual clarity without modifying the resolution of the input images.

In an example, the second image generator comprises a processing pipeline configured to generate both high-resolution and corresponding low-resolution images from a single processing event for a rendering package, such that the high-resolution and low-resolution images used for training the super-resolution model are correlated by being derived from a common input scene.

In an example, the second image generator does not comprise the modified processing pipeline.

## Claims

1. A computing system comprising:
at least one memory;
at least one hardware processor coupled to the at least one memory; and
one or more computer-readable storage media storing computer-executable instructions, that, when executed, cause the computing system to perform operations comprising:
receiving (710) a rendering package with a first image generator;
in response to being provided the rendering package, using (714) the rendering package by the first image generator to generate high-resolution images and corresponding low-resolution images;
training (718) a downscaler network with a first set of a plurality of image pairs of the high- and low-resolution images;
generating (722) additional high-resolution images with the first image generator;
processing (726) the additional high-resolution images generated by the first image generator with the downscaler network to produce additional low-resolution images;
generating (730) a second set of a plurality of image pairs from the processed additional high-resolution images and corresponding additional low-resolution images produced by the downscaler network; and
training (734) a super-resolution model using the second set of images pairs to provide a trained super-resolution model.

2. The computing system of claim 1, wherein the first image generator includes a processing pipeline to generate both high-resolution and low-resolution images from a single processing event for the rendering package.

3. The computing system of claim 1 or claim 2, the operations further comprising:
deploying the trained super-resolution model to a second computing device different from a first computing device on which the downscaler network was trained, the second computing device providing additional low-resolution images from a second image generator of the second computing device, processing the additional low-resolution images from the second image generator with the trained super-resolution model to produce additional high-resolution images, and causing the additional high-resolution images produced by the trained super-resolution model to be rendered for display on a display device of the second computing device;
and optionally, not deploying the downscaler network to the second computing device.

4. The computing system of claim 3, wherein the first set of image pairs is generated by applying a learned downscaling model to high-resolution images, the downscaling model having been trained using correlated high-resolution and low-resolution image pairs generated from a rendering engine configured to produce dual-resolution outputs from a single processing event, and optionally, wherein the correlated image pairs used to train the downscaling model are generated from a rendering engine operating in a frozen simulation state by holding a simulation time value constant during rendering.

5. The computing system of any of claims 3-4, wherein the second image generator does not comprise the modified processing pipeline.

6. The computing system of any of claims 1-5, wherein:
the first image generator is a game engine rendering images for a specific game title and training data for the super-resolution network comprises image pairs from a game title; or
the trained super-resolution model is configured to enhance image details at an input resolution by refining textures, reducing artifacts, and improving visual clarity without modifying the resolution of the input images.

7. The computing system of any of claims 1-6, wherein the super-resolution model comprises a convolutional neural network implemented without any upsampling or resizing layers, the network comprising a plurality of residual blocks that each include convolutional layers with fixed kernel sizes and skip connections, the network being configured to operate entirely at the native resolution of the input image by propagating spatially-aligned features from layer to layer, refining fine-grained detail and suppressing artifacts while preserving the original image layout throughout the inference path.

8. The computing system of claim 7, wherein the super-resolution model is trained using image pairs having identical spatial resolution, the low-quality images being generated by applying a separately trained downscaling model to high-resolution renderings, and the training process being configured by constraining the model to operate at fixed input resolution and by applying one or more loss functions comprising at least one of:
(i) a perceptual loss computed using intermediate feature activations of a pre-trained classification network to promote visual similarity to the high-resolution target, and
(ii) a total variation loss computed from spatial gradients of the output image to suppress high-frequency noise and enhance smoothness,
thereby training the model to perform resolution-preserving image enhancement without learning to increase spatial dimensions.

9. A method, implemented in a computing environment comprising at least one hardware processor and at least one memory coupled to the at least one hardware processor, the method comprising:
receiving high-resolution images generated by a first image generator;
processing the high-resolution images with a downscaler network to generate corresponding low-resolution images;
generating a first set of a plurality of image pairs, each image pair comprising a high-resolution image from the first image generator and a corresponding low-resolution image produced by the downscaler network; and
training a super-resolution model using the first set of image pairs.

10. The method of claim 9, further comprising:
training the downscaler network using a second set of a plurality of image pairs, wherein the second set of image pairs is generated by a second image generator configured with a processing pipeline that processes a rendering package to produce both high-resolution and low-resolution images from a single processing event for the rendering package.

11. The method of claim 10, wherein the first set of image pairs is generated by applying the trained downscaler network to high-resolution images to produce low-quality images of identical spatial resolution, the image pairs being used to train the super-resolution model to enhance image fidelity without altering spatial dimensions.

12. The method of any claims 9-11, wherein the super-resolution model comprises a convolutional neural network constrained to operate at input resolution using residual connections and spatially-aligned convolutional layers, and wherein training is performed using at least one loss function selected to penalize perceptual differences or visual noise without encouraging spatial enlargement.

13. One or more computer-readable storage media comprising:
computer-executable instructions that, when executed by a computing system comprising at least one hardware processor and at least one memory coupled to the at least one hardware processor, cause the computing system to receive (810) input low-resolution images from a first image generator executing on the computing system;
computer-executable instructions that, when executed by the computing system, cause the computing system to process (814) the input low-resolution images with a trained super-resolution model to generate enhanced images;
computer-executable instructions that, when executed by the computing system, cause the computing system to provide (818) the enhanced images for rendering on a display device of the computing system; and
wherein the trained super-resolution model was generated using training data comprising high-resolution images and corresponding low-resolution images, the training data having been obtained from a training process that included:
generating (822) high-resolution images and corresponding low-resolution images using a second image generator configured with a rendering package;
training (826) a downscaler network using a first set of a plurality of image pairs of the high-resolution and low-resolution images;
generating (830) additional high-resolution images with the second image generator and processing the additional high-resolution images with the downscaler network to produce additional low-resolution images;
generating (834) a second set of a plurality of image pairs from the additional high-resolution images and corresponding additional low-resolution images produced by the downscaler network; and
training (838) the super-resolution model using the second set of image pairs.

14. The one or more computer-readable storage media of claim 13, wherein:
the trained super-resolution model comprises a convolutional neural network configured to maintain the spatial resolution of the input image throughout inference, and is implemented without upsampling layers or other components that increase the spatial dimensions of intermediate feature maps; or
the trained super-resolution model is configured to enhance image details at an input resolution by refining textures, reducing artifacts, and improving visual clarity without modifying the resolution of the input images.

15. The one or more computer-readable storage media of any of claims 13-14, wherein:
the second image generator comprises a processing pipeline configured to generate both high-resolution and corresponding low-resolution images from a single processing event for a rendering package, such that the high-resolution and low-resolution images used for training the super-resolution model are correlated by being derived from a common input scene; or
the second image generator does not comprise the modified processing pipeline.
